# EUROPEAN PATENT SPECIFICATION

(11) **EP 2 996 079 B1**
(45) Date of publication and mention of the grant of the patent: **14.11.2018**
(21) Application number: 14290273.3
(22) Date of filing: 12.09.2014
(51) Int. Cl.: G06Q 20/18, G06Q 20/38

(54) **Payment-terminal sharing**
Zahlungsterminal-Sharing
Partage de terminal de paiement

(43) Date of publication of application: 16.03.2016
(73) Proprietor: Amadeus S.A.S., 06410 Biot (FR)
(72) Inventor: Tahon, Mathieu, 28027 Madrid (ES); Bosco, Lorenzo, 06000 Nice (FR); Hirel, Nicolas, 06410 Biot (FR); Milani, Veronica, 06160 Juan les Pins (FR); Diana, Remi, 06600 Antibes (FR)
(74) Representative: Samson & Partner Patentanwälte mbB

(56) References cited:
- EP-A1- 2 541 517
- US-A- 5 745 576
- US-A- 6 128 391
- US-A1- 2014 129 439
- Nxp B.V.: "AN10922 Symmetric key diversifications", , 17 March 2010 (2010-03-17), XP055151671, Retrieved from the Internet: URL:http://www.nxp.com/documents/applicati on_note/AN10922.pdf [retrieved on 2014-11-07]

## Description

### FIELD OF THE INVENTION

The invention relates to payment-terminal sharing.

### BACKGROUND

Cashless payment at vendors can be performed at payment terminals by means of payment cards, e.g. credit cards. Payment terminals typically enable payment-card-industry (PCI) compliant point-to-point transactions to be performed. Such payment terminals, for example, are also used at airports for ticket purchase at ticket counters, and also for last-minute purchases, for example, at boarding gates.

EP 2 541 517 A1 pertains to a POS machine card-payment system. Merchant information in a database can be downloaded to a POS machine terminal, and thus enable the POS machine terminal to perform card-payment operation based on the downloaded merchant information.

US 5,745,576 A pertains to initializing cryptographic terminals in a cryptographic system. A base key is provided that is common to all controllers produced by a manufacturer of cryptographic systems. The base key is installed by the manufacturer of cryptographic terminals in each controller prior to shipment of the controllers. Each cryptographic terminal containing the common base key is provided with an initial key by the manufacturer of the terminal. Each initial key is derived from the particular terminal's serial number and the common base key. Upon installation, the controller and terminal enter into communications whereby the controller is able to securely determine the initial key contained in the terminal as the controller contains the base key.

### SUMMARY OF THE INVENTION

The inventions is defined by the independent claims. Accordingly, a method is provided of configuring a payment terminal to become usable as a payment terminal shared by a plurality of operators with cryptographic segregation between the different operators of the payment terminal. The payment terminal is arranged to communicate with at least one payment provider to perform payment transactions. The payment terminal is associated with a controlling entity that controls usage of the payment terminal in an operator-selective manner. The payment terminal has a terminal-specific access key stored therein, and has a terminal-identification number. The method comprises transmitting an operator- and terminal-specific transport key, encrypted by the terminal-specific access key, to the payment terminal. The encrypted operator- and terminal-specific transport key is decrypted at the payment terminal with the stored terminal-specific access key. Usage of the payment terminal by operators and/or payment providers is granted by the controlling entity remotely without physical contact with the payment terminal. Therefor the operator- and terminal-specific transport key is injected into the payment terminal by storing the operator- and terminal-specific transport key in the payment terminal in an unencrypted or encrypted form. An operator- and terminal-specific initial-encryption key is derived, by the payment provider, from an operator-specific base-derivation key using the terminal-identification number, or an additional identification number of the payment terminal. The operator- and terminal-specific initial-encryption key is symmetrically encrypted with the operator- and terminal-specific transport key. The encrypted operator- and terminal-specific initial-encryption key is transmitted to the payment terminal. The encrypted operator- and terminal-specific initial-encryption key is decrypted at the payment terminal with the decrypted operator- and terminal-specific transport key. An operator- and transaction-specific encryption key is derived, both at the payment provider and the payment terminal, from the operator- and terminal-specific initial-encryption key using a transaction-specific number associated with this transaction, when performing a transaction with the payment terminal. The transaction is performed with the payment terminal.

According to another aspect a system comprising a computerized controlling-entity system, a computerized payment-provider system, and at least one payment terminal. The system is arranged to configure the at least one payment terminal to be usable as a payment terminal shared between a plurality of operators with cryptographic segregation between the different operators of the payment terminal. The system is also arranged to configure the payment terminal to communicate with an operator or at least one payment provider to perform payment transactions. The system is further arranged to configure the payment terminal to be associated with a controlling-entity system that controls usage of the payment terminal in an operator-selective manner remotely, without physical contact with the payment terminal. Therefor the operator- and terminal-specific transport key is injected into the payment terminal, by storing the operator- and terminal-specific transport key in the payment terminal in an unencrypted or encrypted form. The payment terminal is arranged to store a terminal-identification number. The payment terminal comprises at least one tamper-resistant security module (TRSM), which is arranged to store a terminal-specific access key to enable usage of the payment terminal to be controlled by the controlling-entity system in the operator-selective manner. The system is arranged to receive, at the payment terminal, an operator- and terminal-specific transport key, which is encrypted by the terminal-specific access key. The system is also arranged to decrypt, at the payment terminal, the encrypted operator- and terminal-specific transport key with the stored terminal-specific access key. The system is further arranged to receive, at the payment terminal from the payment-provider system, an operator- and terminal-specific initial-encryption key derived from an operator-specific base-derivation key based on the terminal-identification number or an additional identification number of the payment terminal. The operator- and terminal-specific initial-encryption key is symmetrically encrypted by the operator- and terminal-specific transport key. The system is arranged to decrypt, at the payment terminal, the encrypted operator- and terminal-specific initial-encryption key with the decrypted operator- and terminal-specific transport key. The system is also arranged to derive, both at the payment-provider system and at the payment terminal, an operator- and transaction-specific encryption key from the operator- and terminal-specific initial-encryption key using a transaction-specific number associated with this transaction, when performing a transaction with the payment terminal. The system is further arranged to perform the transaction with the payment terminal.

Other features are inherent in the disclosed methods and systems or will become apparent to those skilled in the art from the following description of examples and its accompanying drawings.

### GENERAL DESCRIPTION, ALSO OF OPTIONAL EMBODIMENTS OF THE INVENTION

The method disclosed is for configuring a payment terminal, for example a credit-card reader, to become usable as a payment terminal shared by a plurality of operators with cryptographic segregation between the different operators of the payment terminal. Such an operator is, for example, an airline performing a check-in for a flight.

The cryptographic segregation allows usage, i.e. transmitting payment transactions, of the same payment terminal by the different operators, e.g. different airlines at a boarding gate, secured with operator-specific encryption keys, thereby ensuring operator-specific privacy, such as if each of these operators were the only operator using that payment terminal.

The payment terminal is arranged to communicate with at least one payment provider to perform payment transactions. The payment provider, for example, can be a payment gateway, a credit card company (a credit card company is also referred to as a "switch"), or an acquirer. A payment gateway may bundle transactions with various credit card companies.

The payment terminal is associated with a controlling entity that controls usage of the payment terminal in an operator-selective manner. The controlling entity is, for example, an airport owner that commissioned the payment terminals for an airport. An airport company managing the airport may order payment terminals from a manufacturer to distribute the payment terminals throughout check-in desks, boarding gates, kiosks, and the like.

The controlling entity grants usage to the different operators by using a terminal-specific access key, which allows the controlling entity to manage access authorization for each individual operator of the payment terminal. That is to say, the authorization of payment providers contracted by the operators, i.e. acquirers of the operators, can be controlled by the controlling entity in this manner. More specifically, the authorization of an operator is established by providing the payment terminal with an operator- and terminal-specific transport key, encrypted by the terminal-specific access key.

In some examples the operator- and terminal-specific transport key is verified after decryption by the terminal-specific access key with a key control value (KCV), which is also transmitted along with the encrypted operator- and terminal-specific transport key. The KCV is, for example, the result of an application of a "one-way function" to the operator- and terminal-specific transport key to be verified. A "one-way function" is a function which cannot practically be inverted; that is a function which does not enable the input data which is due to be verified to be reconstructed from the result of the application of the one-way function to the input data. Examples of one-way functions are hash functions. To verify the operator- and terminal-specific transport key, the one-way function (e.g. a hash function) is applied to the decrypted operator- and terminal-specific transport key, and the result of the application is compared to the transmitted KCV. If the result is consistent with the KCV (e.g. if it is identical to the KCV), the operator- and terminal-specific transport key is deemed to be the valid operator- and terminal-specific transport key.

In other examples (without verification by a KCV) the validity of the decrypted operator- and terminal-specific transport key becomes evident during a subsequent payment transaction. If a bit sequence, i.e. a (presumed) operator- and terminal-specific transport key, not encrypted by the correct terminal-specific access key, is transmitted to the payment terminal, the decrypted bit sequence, i.e. the (presumed) operator- and terminal-specific transport key resulting from the decryption with the stored terminal-specific access key, will not be the correct operator- and terminal-specific transport key. Hence, all the keys derived from this incorrect operator- and terminal-specific transport key will also be incorrect. Therefore, communications encrypted by those derived incorrect keys, e.g. user or cardholder authentication requests, made by the payment terminal in the subsequent payment transaction, will not contain any useful information, and will therefore fail.

The payment terminal has a terminal-identification number, i.e. a string of alphanumeric digits of a given length, and has the terminal-specific access key stored within it, e.g. stored in a read-only memory (ROM).

The process of providing the payment terminal with an operator- and terminal-specific transport key, encrypted by the terminal-specific access key, can be performed in various alternative ways, denoted below by "A1", "A2", and "A3". The beginning and end of the description of these alternatives is marked by "(StartA1"), "(EndA1)", "(StartA2)", etc.

(Start A1) In some embodiments, an operator-specific master-transport key is transmitted from at least one payment provider to the controlling entity in a confidentiality-securing manner.

This operator-specific master-transport key is unique per operator and controlling entity. It is, for example, generated securely in the payment provider's tamper-resistant security module (TRSM) and then communicated to the controlling entity in the confidentiality-securing manner. The controlling entity stores the operator-specific master-transport key, for example, in another tamper-resistant security module (TRSM).

An operator- and terminal-specific transport key is derived, both at the payment provider's end and the controlling entity's end, e.g. in the respective TRSMs, from the operator-specific master-transport key using the terminal-identification number, which is, for example, a serial number of the payment terminal.

The operator- and terminal-specific transport key, derived by the controlling entity is symmetrically encrypted, with the terminal-specific access key and then the encrypted operator- and terminal-specific transport key is transmitted to the payment terminal. (End A1)

(Start A2) In alternative embodiments, an operator-specific master-transport key that is unique to each operator and controlling entity is, for example, generated securely in the payment provider's tamper-resistant security module (TRSM).

An operator- and terminal-specific transport key is derived, at the payment provider's end, e.g. in the TRSM, from the operator-specific master-transport key using the terminal-identification number, and is transmitted to the controlling entity in a confidentiality-securing manner.

This operator- and terminal-specific transport key is symmetrically encrypted, by the controlling entity, with the terminal-specific access key and then the encrypted operator- and terminal-specific transport key is transmitted to the payment terminal. (End A2)

(Start A3) In other alternative embodiments, the operator- and terminal-specific transport key is provided to the payment terminal by manually inputting the operator- and terminal-specific transport key, symmetrically encrypted by the terminal-specific access key, into the payment terminal.

This manual input can be a manual interaction with the payment terminal, e.g. navigating through the payment terminal's guided menu and entering the operator- and terminal-specific transport key, encrypted with the terminal-specific access key, in binary-coded decimal (BCD) format. Alternatively, the manual input can be an insertion of a removable storage device into the payment terminal, for example, an USB flash drive or a memory card. (End A3)

In all these alternatives (A1, A2, A3), the controlling entity is able to control the usage of the payment terminal in the operator-selective manner with the operator- and terminal-specific transport key, as this key is used for decryption of subsequent communications between a payment provider and the payment terminal if an operator, associated with that payment provider, initiates a payment transaction.

On the one hand, the use of symmetrical encryption for the operator- and terminal-specific transport key permits less complex key management than, for example asymmetric encryption, as there is no independent certificate authority (CA) required to manage distribution of verified public keys. On the other hand, the transmission of the symmetric key is acceptable from the security perspective since a "shared secret" is derived at both ends of the transmission and can, as described above, be verified with a KCV or the like. Furthermore, the initial cryptographic key, used for both encryption and decryption of subsequent keys transmitted to the payment terminal, is fed into the payment terminal in confidentiality-securing manner, for example, within a secure room located at the terminal provider's manufacturing facilities.

The security modules mentioned above may be storage devices with physical characteristics that make successful tampering difficult and improbable. Tampering might include penetration without zeroization of security parameters, unauthorized modification of an internal operation of the TRSM, or insertion of tapping mechanisms or non-intrusive eavesdropping methods to determine, record, or modify secret data.

The encrypted operator- and terminal-specific transport key is decrypted at the payment terminal with the stored terminal-specific access key, as described above.

In some examples the encrypted operator- and terminal-specific transport key is decrypted with the terminal-specific access key at the payment terminal upon receipt, and the decrypted operator- and terminal-specific transport key is stored in a secure storage of the payment terminal, such as the TRSM.
In alternatives examples the received encrypted operator- and terminal-specific transport key is first stored in the payment terminal in its encrypted form and is only later decrypted with the terminal-specific access key at the payment terminal "on the fly", i.e. only when the decrypted version of the operator- and terminal-specific transport key is required for the decryption of the encrypted operator- and terminal-specific initial-encryption key to perform a transaction with the payment terminal, e.g. a payment transaction.

The controlling entity can grant usage of the payment terminal to an operator with the corresponding operator- and terminal-specific transport key as this key is used for decryption of subsequent communication between the payment terminal and the payment provider associated with the operator performing transactions with the payment terminal.

An operator- and terminal-specific initial-encryption key is derived, by the payment provider, from an operator-specific base-derivation key using the terminal-identification number, or an additional identification number of the payment terminal.

The operator-specific base-derivation key, for example, may be unique to each operator and payment provider and is generated securely in the payment provider's TRSM and, in normal circumstances, never leaves this secure environment. The operator- and terminal-specific initial-encryption key is unique to each payment terminal and is generated, for example, in the payment provider's TRSM by derivation from the operator-specific base-derivation key using derivation data based on the terminal-identification number of the payment terminal.

The operator- and terminal-specific initial-encryption key is symmetrically encrypted with the operator- and terminal-specific transport key. The encrypted version of that key is transmitted to the payment terminal. The encrypted version received at the payment terminal is decrypted at the payment terminal using the previously stored operator- and terminal-specific transport key.

In some examples the decrypted version of the operator- and terminal-specific initial-encryption key is stored in a secure storage of the payment terminal, for example, in the payment terminal's TRSM.

In some examples the encrypted operator- and terminal-specific initial-encryption key is decrypted with the operator- and terminal-specific transport key at the payment terminal upon receipt or input, and the decrypted operator- and terminal-specific initial-encryption key is stored in a secure storage of the payment terminal, for example the TRSM.

The process of transmitting the encrypted operator- and terminal-specific initial-encryption key, decrypting the encrypted operator- and terminal-specific initial-encryption key, and storing the decrypted operator- and terminal-specific initial-encryption key in the payment terminal can be considered to be a process of feeding (or, figuratively speaking, "injecting") the operator- and terminal-specific initial-encryption key into the payment terminal.

In an alternative example, the received encrypted terminal-specific initial-encryption key is first stored in the payment terminal in its encrypted form upon receipt or input and is only later decrypted with the operator- and terminal-specific transport key at the payment terminal when the decrypted terminal-specific initial-encryption key is required for obtaining the operator- and transaction-specific encryption key using the decrypted operator- and terminal-specific initial-encryption key to perform a transaction with the payment terminal, e.g. a payment transaction.

In this alternative example the operator- and terminal-specific initial-encryption key is stored still in the encrypted form in the payment terminal in a not secure memory, e.g. a normal memory outside the TRSM, and is only decrypted when needed, i.e. it is "decrypted on the fly". In this alternative example security for the operator- and terminal-specific initial-encryption key is provided by encryption, rather than by storing it in the unencrypted form in a secure memory, such as a TRSM. In this alternative example the feeding (or the "injection") of the operator- and terminal-specific initial-encryption key process into the payment terminal can be seen in the transmission of the encrypted operator- and terminal-specific initial-encryption key to the payment terminal, and its storage in the still encrypted form in the payment terminal. The later decryption of this key "on the fly" can be considered to be part of the subsequent activity of deriving an operator- and transaction-specific encryption key.

An operator- and transaction-specific encryption key is derived, both at the payment provider's end and at the payment terminal, from the operator- and terminal-specific initial-encryption key using a transaction-specific number associated with this transaction, when a transaction is performed with the payment terminal. Such a transaction would be performed when e.g. cashless payment is made by means of a payment card, such as a credit card, being inserted into the payment terminal, for example for ticket purchase at the ticket counter of an airport, or for a last-minute purchase, for example, at a boarding gate of an airport.

In some examples the "at least one payment provider" is a single payment-gateway provider that, for example, validates airline payments, combats fraud and enables fund collection. The payment-gateway provider may allow the airline to protect revenue via various checks of booking and/or payment data. The single payment-gateway provider may provide an interface to a plurality of credit-card companies, banks, etc., and can therefore be considered to be a mediator between the operator of the payment terminal and the various credit-card companies, banks, etc., and bundles the communications with the various credit-card companies, banks, etc. Hence, in the payment transactions the operator of the payment terminal transacts only indirectly with the various credit card companies, banks, etc. through the single payment-gateway provider.

In other examples the "at least one payment provider" is one of a plurality of payment providers, e.g. a credit-card company that settles payments with the operator of the payment terminal. In these other examples, the operator of the payment terminal interacts directly with the various credit-card companies, banks, etc., without the bundling effect mentioned for the case of a single payment-gateway provider.

In some examples at least one of the terminal-specific access key, the operator-specific master-transport key, the operator- and terminal-specific transport key, the operator-specific base-derivation key, the operator- and terminal-specific initial-encryption key, and the operator- and transaction-specific encryption key is a symmetric-encryption key. In some examples some or all of these keys are symmetric-encryption keys.

Symmetric-encryption key in this context stands for usage of the same cryptographic keys for both encryption of plaintext and decryption of ciphertext. The encryption and decryption keys may be identical or there may be a simple transformation between them as, for example, in the International Data Encryption Algorithm (IDEA). The keys, in practice, represent a shared secret between two or more parties that can be used to maintain a private information link.

In some of these examples the at least one of, some of, or all of the symmetric-encryption keys are triple keys according to the Triple Data Encryption Algorithm (TDEA), which applies the Data Encryption Standard (DES) cipher algorithm three times to each data block.

DES is a block cipher and encrypts data in 64-bit blocks. A 64-bit block of plaintext is input into the algorithm, and a 64-bit block of ciphertext is output. DES is symmetric: In principle, the same algorithm and key are used for both encryption and decryption (except for minor differences in key schedule). More specifically, DES uses keys with a key length of 56 bits. The key is usually expressed as a 64-bit number, but every eighth bit is used for parity checking and is ignored. At the simplest level, the algorithm is a combination of the two basic techniques of encryption: confusion and diffusion. The fundamental building block of DES is a combination of these techniques, i.e. a substitution followed by a permutation, on the text, based on the key. This is known as a round. DES has 16 rounds and therefore applies the same combination of techniques to the plaintext block 16 times. The algorithm uses standard arithmetic and logical operations on numbers of 64 bits at most.

Triple DES (3DES) uses a "key bundle" that comprises three DES keys, K1, K2 and K3, each of 56 bits (excluding parity bits). The procedure is as follows: DES encryption with K1, DES decryption with K2, then DES encryption with K3. Decryption is the reverse, i.e., decryption with K3, encryption with K2, then decryption with K1. Each triple encryption encrypts one block of 64 bits of data.

The 3DES standard defines three keying options: (i) all three keys are independent, (ii) K1 and K2 are independent, and K3 = K1, and (iii) all three keys are identical, i.e. K1 = K2 = K3. Keying option 1 is strongest with 3 × 56 = 168 independent key bits. Each DES key is nominally stored or transmitted as 8 bytes, each of odd parity. So a key bundle requires 24, 16 or 8 bytes for keying option (i), (ii), or (iii), respectively.

In some examples the payment terminal is arranged to provide at least two usage modes, a direct-usage mode in which transaction data is exchanged between the payment terminal and one of the operators, and a delegated-usage mode in which transaction data is exchanged between the payment terminal and at least one payment provider. The payment-terminal is pre-configured by an assignment of usage modes to operators of the plurality of operators (4). For example, considering operators A, B, C, D, E, the direct-usage mode might be assigned to the operators A, B, D, and the delegated-usage mode might be assigned to the operators C and E; and the payment terminal is pre-configured according to this assignment. When one of the operators of the plurality of operators, e.g. the operator A or the operator C, starts to use the payment terminal, e.g. to perform a transaction, the usage mode assigned to this operator, i.e. in this example the direct-usage mode and the delegated-usage mode, respectively, is automatically selected by the payment terminal, and the payment terminal performs the transaction using the selected usage mode, i.e. in this example the direct-usage mode and the delegated-usage mode, respectively.

The method described so far started from a state in which the payment terminal has a terminal-specific access key stored therein. There are various options of how the terminal-specific access key is obtained and stored. In some optional examples the terminal-specific access key used by the controlling entity for symmetric encryption is derived from a controlling-entity-specific master-access key using the terminal-identification number, e.g. payment-terminal serial number, or an additional identification number of the payment terminal, e.g. a random number generated for each individual payment terminal. The controlling-entity-specific master-access key may be unique to each controlling entity and payment-terminal manufacturer. The controlling-entity-specific master-access key is generated securely in the controlling entity's TRSM, and is optionally transmitted to the manufacturer, i.e. the terminal provider, in a confidentiality-securing manner, and is optionally stored there in another TRSM.

In some examples the terminal-specific access key is stored in the payment terminal after being transmitted to the payment terminal in a confidentiality-securing manner by a terminal provider, i.e. the manufacturer of the payment terminal. The terminal-specific access key can be loaded into the payment terminal in a secure room at the terminal provider's, i.e. at the terminals provider's manufacturing facilities, before the payment terminal is delivered to the controlling entity.

In some examples the terminal-specific access key is derived, by the terminal provider, from a controlling-entity-specific master-access key by using the terminal-identification number, or an additional identification number of the payment terminal. The terminal provider retrieves the controlling-entity-specific master-access key, for example, from a TRSM on which that key is stored.

The terminal provider may then perform a derivation operation on the controlling-entity-specific master-access key using the terminal-identification number of that payment terminal. For example, cipher block chaining may be used. The cipher block chaining (CBC) algorithm described in ISO 9797-1, for example, uses 16 bytes (length of a double length key) derivation data. This derivation can be composed of the last eight bytes (right part) of the terminal-identification number in binary coded decimals (BCD) padded with binary zeroes on the left and the first eight bytes (left part) of the terminal-identification number in binary coded decimals (BCD) padded on 8 bytes XOR [FF FF FF FF FF FF FF FF]. In this context F stands for the highest hexadecimal value and XOR stands for "exclusive or", which is a logical operation that outputs true whenever both inputs differ, i.e. one is true, the other is false.

A terminal-identification number of, for example, 123456789 yields a right part of [00 00 00 01 23 45 67 89] and a left part of [00 00 00 01 23 45 67 89] XOR [FF FF FF FF FF FF FF FF] = [FF FF FF FE DC BA 98 76]. This results in a derivation data block of [FF FF FF FE DC BA 98 76 00 00 00 01 23 45 67 89] used for the derivation of the controlling-entity-specific master-access key leading to the terminal-specific access key.

Once the key has been fed (or "injected") into the payment terminal, the payment terminal can be delivered and installed into the owner's premises.

In some examples the controlling-entity-specific master-access key is transmitted to the terminal provider in a confidentiality-securing manner by the controlling entity. The controlling entity, for example, generates the controlling-entity-specific master-access key, which is used both for deriving the terminal-specific access key at the controlling entity's end and for implantation of the terminal-specific access key into the payment terminal by the terminal provider.

In some examples authorization for any number of operators and/or payment providers and thereby usage of the payment terminal by those operators and/or payment providers can be added dynamically, without physical intervention on the payment terminal. In other words, usage of the payment terminal by these operators and/or payment providers can be granted by the controlling entity remotely, without physical contact with the payment terminal.

Since the operator- and terminal-specific transport key is determined by the payment provider, e.g. by transmitting the master key from which the individual operator- and terminal-specific transport keys are derived or by transmitting the operator- and terminal-specific transport key itself, usage of the payment terminal by different operators is not limited to a predefined maximum number of different users.

Only the terminal-specific access key is pre-installed in the payment terminal, all other keys needed for payment transactions performed by different operators are provided to the payment terminal in subsequent encrypted transmissions. Those transmissions are encrypted with the terminal-specific access key or are encrypted with keys derived from already received keys.

In some examples the confidentiality-securing manner, in which the operator-specific master-transport key is transmitted from the payment provider to the controlling entity, is an asymmetric encryption-key algorithm. Generally, a communication being sent should not be readable during transit (preserving confidentiality) and the communication should not be modifiable during transit (preserving the integrity of the communication). Combining public-key cryptography with an enveloped public key encryption (EPKE) method, allows for relatively secure communication over an open networked environment. In public-key cryptography asymmetric key algorithms are used, where a key used to encrypt a message is not the same as the key used to decrypt the message. Each user has a pair of cryptographic keys - a public encryption key and a private decryption key. The keys are related mathematically, but parameters are chosen so that calculating the private key from the public key is either impossible or prohibitively expensive.

The computerized controlling-entity system disclosed is arranged to configure a payment terminal, which has a terminal-identification number, to be usable as a payment terminal shared by a plurality of operators with cryptographic segregation between the different operators of the payment terminal.

The controlling-entity system may be arranged to derive an operator- and terminal-specific transport key from an operator-specific master-transport key by using the terminal-identification number.

The controlling-entity system may be arranged to encrypt the operator- and terminal-specific transport key symmetrically with a terminal-specific access key and transmit the encrypted operator- and terminal-specific transport key to the payment terminal.

In some examples the computerized controlling-entity system is arranged to configure the payment terminal according to any or all of the above-mentioned examples.

The computerized payment-provider system disclosed is arranged to configure a payment terminal, which has a terminal-identification number, to be usable as a payment terminal shared by a plurality of operators with cryptographic segregation between the different operators of the payment terminal.

The payment-provider system may derive an operator- and terminal-specific transport key from an operator-specific master-transport key by using the terminal-identification number and may derive an operator- and terminal-specific initial-encryption key from an operator-specific base-derivation key also by using the terminal-identification number, or by using an additional identification number of the payment terminal.

The payment-provider system is arranged to transmit the operator-specific master-transport key to a controlling entity in a confidentiality-securing manner, wherein the payment terminal is associated with the controlling entity. Alternatively, the payment-provider system is arranged to transmit the operator- and terminal-specific transport key to the controlling entity in a confidentiality-securing manner.

The payment-provider system may encrypt the operator- and terminal-specific initial-encryption key symmetrically with the operator- and terminal-specific transport key and may feed the operator- and terminal-specific initial-encryption key into the payment terminal by transmitting the encrypted operator- and terminal-specific initial-encryption key to the payment terminal.

The payment-provider system may derive an operator- and transaction-specific encryption key from the operator- and terminal-specific initial-encryption key using a transaction-specific number associated with the transaction, when performing a transaction with the payment terminal.

In some examples the computerized payment-provider system is arranged to configure the payment terminal according to any or all of the above-mentioned examples.

The payment terminal disclosed is programmed to be usable as a payment terminal shared by a plurality of operators with cryptographic segregation between the different operators of the payment terminal. The payment terminal is arranged to communicate with at least one payment provider to perform payment transactions and is arranged to be associated with a controlling entity that controls usage of the payment terminal in an operator-selective manner.

The payment terminal has at least one tamper-resistant security module (TRSM) used for key management. The at least one TRSM, as mentioned above, for example, has physical characteristics that make successful tampering of information stored therein difficult and improbable, e.g. as defined in ANSI X9.24-1-2009 (Retail Financial Services Symmetric Key Management Part 1: Using Symmetric Techniques*).* Such physical characteristics may include, for example, a memory on which cryptographic keys are stored, which oxidizes when in contact with air, i.e. self-destructs, to make any stored cryptographic key unreadable.

The payment terminal's tamper-resistant security module(s) is (are) arranged to store an manage within the TRSM one ore more cryptographic keys, that is at least the terminal-specific access key to enable usage of the payment terminal to be controlled by the controlling entity in the operator-selective manner.

In some examples the at least one operator- and terminal-specific transport key and/or the at least one encrypted operator- and terminal-specific initial-encryption key may be decrypted at the payment terminal upon receipt or input. The at least one operator- and terminal-specific transport key and/or the at least one operator- and terminal-specific initial-encryption key may also be stored and managed within the secure memory, e.g. the TRSM. The securely stored decrypted operator- and terminal-specific transport key and/or the securely stored decrypted operator- and terminal-specific initial-encryption key is/are then readily available for the decryption of the encrypted operator- and terminal-specific initial-encryption key and/or for obtaining the operator- and transaction-specific encryption key.

In other examples in which the decrypted version of the operator- and terminal-specific transport key and/or the operator- and terminal-specific initial-encryption key is/are not stored in a secure storage of the payment terminal, for example, the payment terminal's TRSM, the encrypted operator- and terminal-specific transport key and/or the encrypted operator- and terminal-specific initial-encryption key can be stored a normal (unsecure) memory, and is/are only decrypted "on the fly" when needed for the decryption of the encrypted operator- and terminal-specific initial-encryption key and/or for obtaining the operator- and transaction-specific encryption key to perform a transaction with the payment terminal, e.g. a payment transaction.

In some examples the payment terminal is configured according to any or all of the above mentioned examples.

### BRIEF DESCRIPTION OF THE DRAWINGS

Exemplary embodiments of the invention are now described, also with reference to the accompanying drawings, wherein
- Fig. 1: illustrates a diagram summing up cryptographic key generations, derivations, and exchanges between different payment-transaction actors,
- Fig. 2: illustrates an exemplary key-derivation algorithm that generates a new key derived from a basic key,
- Fig. 3: illustrates functional relationships between the different payment-transaction actors shown in Fig. 1,
- Fig. 4: illustrates key exchanges for an encrypted data transmission,
- Fig. 5: illustrates an exemplary payment terminal for payment cards,
- Fig. 6: illustrates a tamper-resistant security module of the payment terminal shown in Fig. 5,
- Fig. 7: illustrates an exemplary computer system, according to the controlling-entity system and the payment-provider system described herein, arranged to configure the payment terminal.

The drawings and the description of the drawings are of examples of the invention and are not of the invention itself.

### DESCRIPTION OF EMBODIMENTS

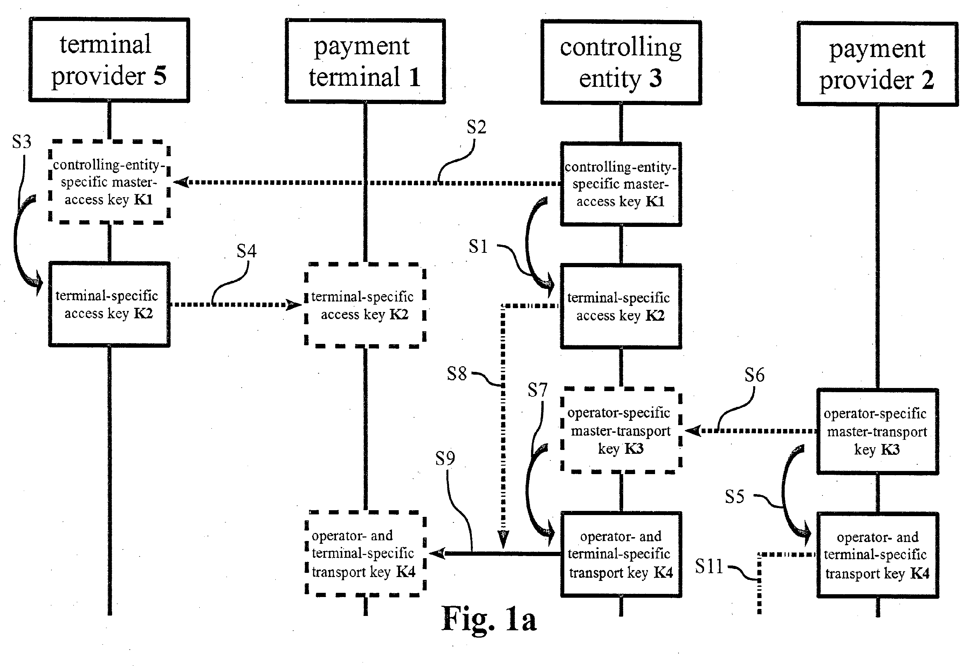

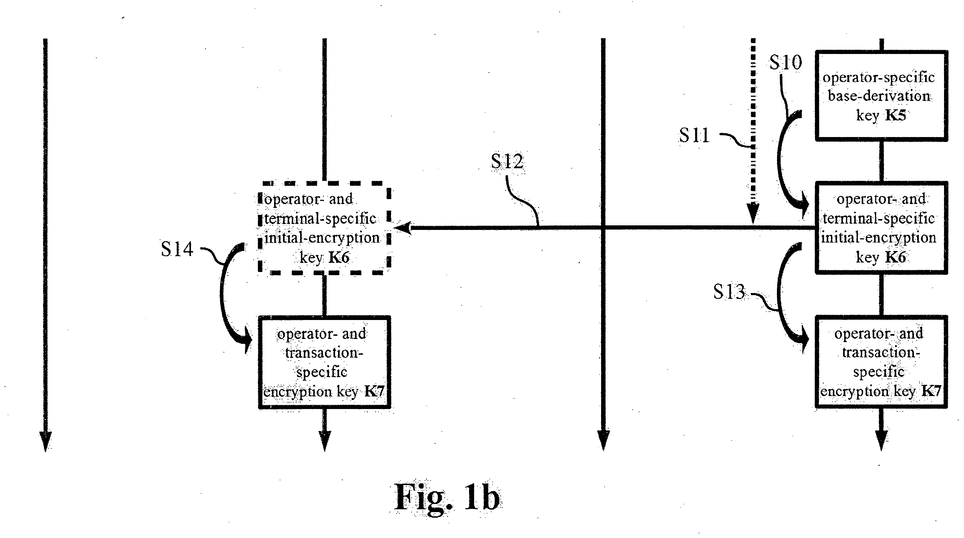

In the exemplary embodiment illustrated by Fig. 1, key exchanges between the payment provider 2, e.g. the acquirer of an airline, the controlling entity 3, e.g. the airport owner, the payment-terminal manufacturer, i.e. the terminal provider 5, and the payment terminal 1 are shown.

Curved arrows indicate a derivation either by using the terminal-identification number 44 of the payment terminal 1 or a transaction-specific number 27 of an ongoing transaction 26. The key derivations based on the terminal-identification number 44 are indicated as S1, S3, S5, S7, and S10. The key derivations based on a transaction-specific number 27 are indicated as S13 and S14. Line-dotted arrows indicate symmetrical encryptions S8 and S11, whereas dotted arrows indicate secure transmissions S2, S4, and S6, e.g. by a courier. Line-dotted boxes around keys indicate sent copies of these keys.

The controlling entity 3 generates a controlling-entity-specific master-access key K1 and securely transmits S2 the controlling-entity-specific master-access key K1 to the terminal provider 5 that manufactures the payment terminals 1 for the controlling entity 3. The terminal provider 5 stores this key, as it does with the keys of all the other controlling entities the terminal provider 5 does business with. This controlling-entity-specific master-access key K1 is unique for each controlling-entity-to-terminal-provider relation, i.e. business contract.

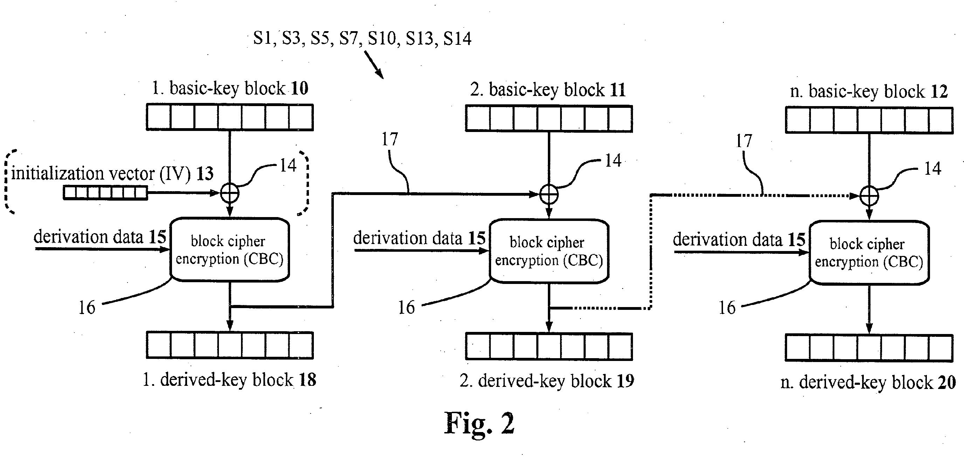

The terminal provider 5 derives S3 a terminal-specific access key K2 for each payment terminal 1 based on the controlling-entity-specific master-access key K1 and the identification number 44 of the payment terminal 1. The future owner of the payment terminals 1, i.e. the controlling entity 3, can derive S1 the individual terminal-specific access keys K2 in the same way, as both the terminal provider 5 and the controlling entity 3 share the same key derivation algorithm (see Fig. 2). The terminal-specific access key K2 is implanted S4 into the corresponding payment terminal 1 in a secure room at the terminal provider's production facilities.

The above-described way of implantation of the terminal-specific access key K2 into the payment terminal 1 is optional. Various alternative ways for the terminal-specific-access-key implantation are also covered.

The payment provider 2 generates an operator-specific master-transport key K3 and securely transmits S6 the operator-specific master-transport key K3 to the controlling entity 3, for example, by means of an asymmetric encryption algorithm or by a certified courier. This operator-specific master-transport key K3 is unique for each controlling-entity-to-operator relation, i.e. business contract.

The controlling entity 3 derives S7 an operator- and terminal-specific transport key K4 from the operator-specific master-transport key K3 and the terminal-identification number 44 of the payment terminal 1. The payment provider 2 can derive S5 the individual operator- and terminal-specific transport keys K4 in the same way, as both the payment provider 2 and the controlling entity 3 share the same key-derivation algorithm (see Fig. 2).

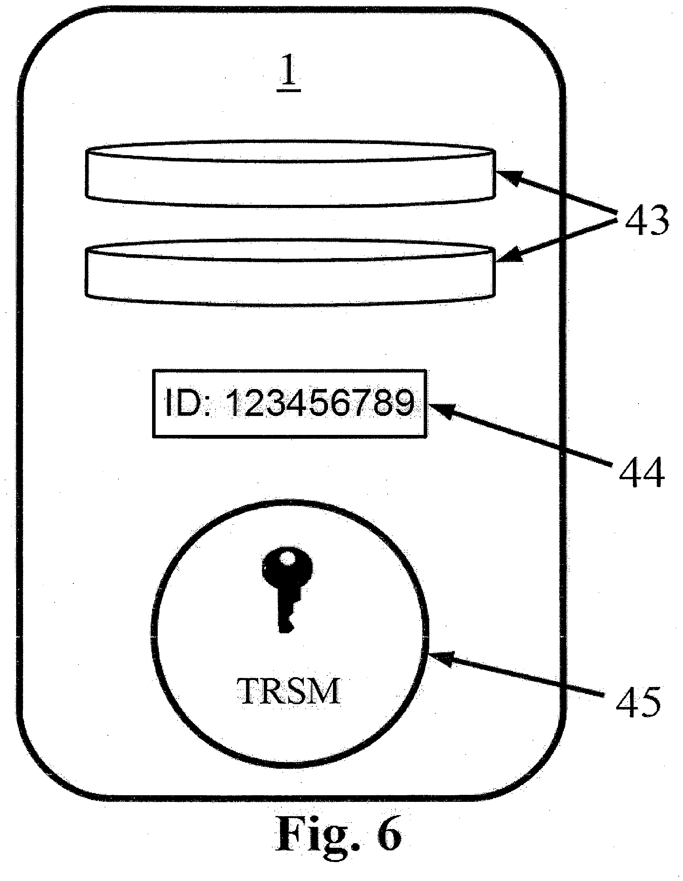

The controlling entity 3 encrypts S8 the individual operator- and terminal-specific transport keys K4 with the corresponding terminal-specific access keys K2 before transmitting the operator- and terminal-specific transport keys K4 to the corresponding payment terminals 1. The controlling entity 3 transmits S9 the operator- and terminal-specific transport keys K4 to the corresponding payment terminals 1. In other words, each operator- and terminal-specific transport key K4 is encrypted S8 by an individual terminal-specific access key K2 corresponding to the same terminal-identification number 44 and can only be decrypted in the corresponding payment terminal 1, which has been loaded S4 with the same terminal-specific access key K2. In some embodiments, the operator- and terminal-specific transport key K4 is decrypted with the corresponding terminal-specific access key K2 upon receipt at the payment terminal 1, and the decrypted operator- and terminal-specific transport key K4 is stored in the payment terminal 1, e.g. in a secure manner, for example in a tamper-resistant security module (TRSM) 45 (Fig. 6).

In an alternative embodiment the operator- and terminal-specific transport key K4 is not decrypted upon receipt, but is stored still in the encrypted form in the payment terminal 1, and is only decrypted when needed, i.e. it is "decrypted on the fly". In this alternative embodiment security for the operator- and terminal-specific transport key K4 is provided by keeping it encrypted, rather than by storing it in the unencrypted form in a secure storage, such as a TRSM 45. Hence, in this alternative embodiment the operator- and terminal-specific transport key K4 can optionally be stored in a not secure memory, e.g. a normal memory (for example, a ROM) outside the TRSM 45.

The payment provider 2 generates an operator-specific base-derivation key K5, which is unique for each operator-to-payment-provider relation, i.e. business contract. The payment provider 2 derives S10 an individual operator- and terminal-specific initial-encryption key K6 for each payment terminal 1 from the operator-specific base-derivation key K5 and the terminal-identification number 44 of the payment terminals 1.

The payment provider 2 encrypts S11 the individual operator- and terminal-specific initial-encryption keys K6 with the corresponding operator- and terminal-specific transport keys K4 before transmitting the operator- and terminal-specific initial-encryption keys K6 to the corresponding payment terminals 1. The payment provider 2 transmits S12 the encrypted operator- and terminal-specific initial-encryption keys K6 to the corresponding payment terminals 1. In other words, each operator- and terminal-specific initial-encryption key K6 is encrypted S11 by an individual operator- and terminal-specific transport key K4 corresponding to the same terminal-identification number 6 and can only be decrypted in the corresponding payment terminal 1, which has been fed in S9' with the respective operator- and terminal-specific transport key K4. In some embodiments, the operator- and terminal-specific initial-encryption key K6 is decrypted with the corresponding operator- and terminal-specific transport key K4 upon receipt at the payment terminal 1, and the decrypted operator- and terminal-specific initial-encryption key K6 is stored in the payment terminal 1, e.g. in a secure manner, for example in a tamper-resistant security module (TRSM) 45 (Fig. 6).

In an alternative embodiment the operator- and terminal-specific initial-encryption key K6 is not decrypted upon receipt, but is stored still in the encrypted form in the payment terminal 1, and is only decrypted when needed, i.e. it is "decrypted on the fly". In this alternative embodiment security for the operator- and terminal-specific initial-encryption key K6 is provided by keeping it encrypted, rather than by storing it in the unencrypted form in a secure storage, such as a TRSM 45. Hence, in this alternative embodiment the operator- and terminal-specific initial-encryption key K6 can optionally be stored in a not secure memory, e.g. a normal memory (for example, a ROM) outside the TRSM 45.

The payment terminal 1 derives S14 an operator- and transaction-specific encryption key K7 from the operator- and terminal-specific initial-encryption key K6 and the transaction-specific number 27 of an ongoing transaction 26. The payment provider 2 can derive S13 the individual operator- and transaction-specific encryption keys K7 in the same way, as both the payment terminal 1 and the payment provider 2 share the same key derivation algorithm (see Fig. 2).

The operator- and transaction-specific encryption key K7 is the basis for deriving, for example, a PIN-encryption key, sensitive-data-encryption keys, and MAC-signature keys used in the transmission of encrypted data S17 between the payment terminal 1 and the payment provider 2, e.g. currency-transfer operations, authentication requests, or the like, during a transaction 26.

An exemplary key-derivation algorithm, the cipher block chaining (CBC) algorithm described above, is shown in Fig. 2. A basic key having n basic-key blocks 10, 11, 12 is used to create new keys, which are based on the basic key and a derivation data 15, and have n derived-key blocks 18, 19, 20. This derivation data 15 can be a hexadecimal number, based on the terminal-identification number 44 or a transaction-specific number 27, with a length corresponding to the basic key, e.g. double the key length.

A new key is generated, i.e. derived, from the basic key by encrypting all basic-key blocks 10, 11, to 12 with a block cipher encryption 16, which has a given cipher block size. The encryption is sequential and the basic key is padded to a multiple of the cipher block size.

The first basic-key block 10 is XORed 14, i.e. is summed modulo two, with an initialization vector (IV) 13. Without this initialization vector 13 each subsequent derivation of the same first block would yield the same derived block.

Since this algorithm is used for key derivation, based on a terminal- or transaction-specific number 44, 27, and not for data encryption, i.e. the derivation data 15 used for the block cipher encryption 16 changes for each derived key, the XORing of the first basic-key block 10 with an initialization vector 13 is optional.

The second basic-key block 11 is combined 17 with the first derived-key block 18 by XORing 14. Hence, an input of the block cipher encryption 16 is dependent on an output of a preceding block cipher encryption 16. The algorithm is therefore called cipher block chaining (CBC) algorithm. The second basic-key block 11 XORed the first derived-key block 18 yields the second derived-key block 19 after block cipher encryption 16 with the derivation data 15.

This process is repeated until all n basic-key blocks have been XORed with the preceding derived-key block and have been encrypted with the derivation data 15. This way, each derived-key block depends on all basic-key blocks processed up to that point. The resulting derived key has the same length as the basic key. As this derivation is a unique mapping rule, different entities in different locations can derive the same key from the same basic key with the above described algorithm.

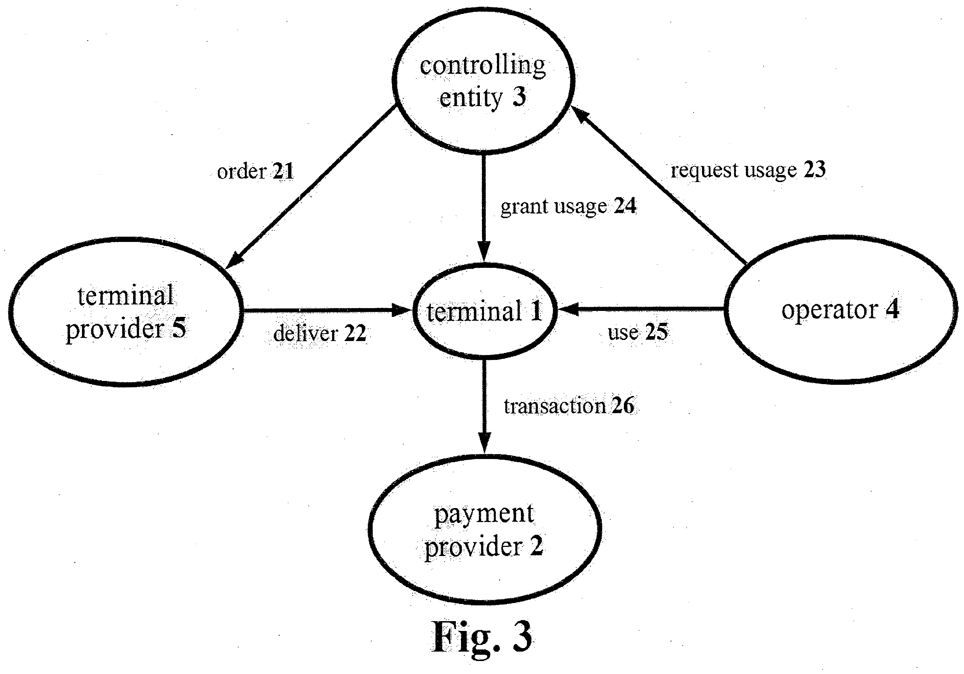

Functional relationships and a chronological order of activities (reference signs 21 to 26 in ascending order) for a payment transaction, executed by different payment- and transaction actors, are illustrated for an example shown in Fig. 3.

The controlling entity 1 instructs a terminal provider 5, i.e. a payment terminal manufacturer, to produce the payment terminal 1 by making a business contract, i.e. by ordering 21 the payment terminal 1 from the terminal provider 5.

The terminal provider 5 delivers 22 the payment terminal 1 based on the controlling entity's specifications to the controlling entity 3 on completion of the payment terminal 1. The specifications include, for example, an implanted given access key, e.g. a terminal-specific access key K2, derived from a controlling-entity-specific master-access key K1 and the terminal-identification number 44 of the payment terminal 1.

After delivery 22 of the payment terminal 1 to the controlling entity 3, an operator 4 can request usage 23 of the payment terminal 1. The operator can, for example, rent the payment terminal 1 from the controlling entity 3 for the duration of a business contract.

Once the controlling entity 3 grants the operator 4 the right to use payment terminal 1 (the grant being labelled as 24)an operator- and terminal-specific transport key K4 is injected S9' into the payment terminal 1 by the controlling entity 3. The operator- and terminal-specific transport key K4 is individually chosen for the operator 4 and enables the operator 4 to operate the payment terminal 1.

The payment terminal 1 can then be used 25 by the operator 4 to perform transactions 26 with one or more payment providers 2, i.e. acquirers of the operator 4. During these transactions 26 encrypted transmissions of sensitive data S17 are exchanged between the payment terminal 1 and a payment provider 2.

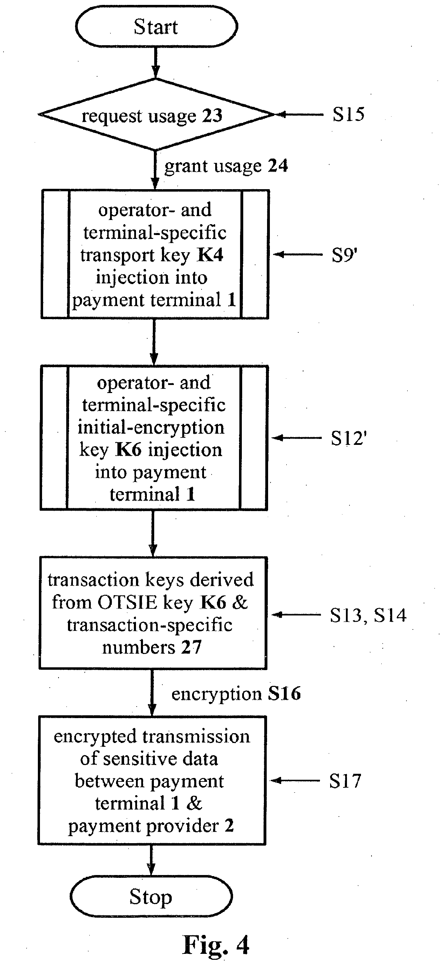

Exemplary activities to prepare a payment transaction 26 at a check-in desk are shown in Fig. 4. At S15 usage of the payment terminal 1 is first of all requested at 23 by an operator 4, e.g. when the operator 4 opens a contractual relationship with the controlling entity 3.

If usage of the payment terminal 1 is granted at 24 by the controlling entity 3 of the airport to the operator 2, an operator- and terminal-specific transport key K4 is fed into the payment terminal S9'.

The operator- and terminal-specific transport key K4 is symmetrically encrypted S8 with a terminal-specific access key K2, where both keys are derived S1, S7 with the same terminal-identification number 44. The injection of the operator- and terminal-specific transport key K4, labeled as S9' in Fig. 4, involves transmitting S9 the symmetrically encrypted operator- and terminal-specific transport key K4 from the controlling entity 3 to the payment terminal 1. In some embodiments, the key injection S9' also involves decrypting the encrypted operator- and terminal-specific transport key K4 with the terminal-specific access key K2, which was previously stored in the payment terminal 1, e.g. during production, and storing of the operator- and terminal-specific transport key K4 within the payment terminal 1 upon decryption, e.g. in a secure manner. In other embodiments, the decryption of the operator- and terminal-specific transport key K4 may be deferred until the decrypted operator- and terminal-specific transport key K4 is actually needed. It can therefore be stored in a not secure manner. The activity of decrypting the encrypted operator- and terminal-specific transport key K4 with the stored terminal-specific access key K2 in the payment terminal 1 "on the fly" will then form part an initial part of the decryption of the encrypted operator- and terminal-specific initial-encryption key K6 described below.

As the name suggests, the operator- and terminal-specific transport key K4 is used for transportation of another encryption key in a confidentiality-securing manner, i.e. encryption. An operator- and terminal-specific initial-encryption key K6 is fed into the payment terminal S12', which is the basis for transaction-related encryption keys.

The operator- and terminal-specific initial-encryption key K6 is symmetrically encrypted S11 with the operator- and terminal-specific transport key K4, where both keys are derived S7, S10 with the same terminal-identification number 44. The injection of the operator- and terminal-specific initial-encryption key K6, labeled as S12' in Fig. 4, involves transmitting S12 the symmetrically encrypted operator- and terminal-specific initial-encryption key K6 from the payment provider 2 to the payment terminal 1. In some embodiments, the key injection S12' also involves decrypting the encrypted operator- and terminal-specific initial-encryption key K6 with the decrypted operator- and terminal-specific transport key K4 in the payment terminal 1, and storing of the operator- and terminal-specific initial-encryption key K6 upon decryption within the payment terminal 1, e.g. in a secure manner. In other embodiments, the decryption of the encrypted operator- and terminal-specific initial-encryption key K6 may be deferred until the decrypted operator- and terminal-specific initial-encryption key K6 is actually needed. It can therefore be stored in a not secure manner. The activity of decrypting the encrypted operator- and terminal-specific initial-encryption key K6 with the operator- and terminal-specific transport key K4 decrypted in the payment terminal 1 "on the fly" will then form part of the derivation S14 of the operator- and transaction-specific encryption key K7 described below.

At a certain stage there will be a need to start doing some transactions with the payment terminal 1 for one of the operators 4. For example, in the case of shared airport's kiosks, a customer would select the airline at issue (= operator 4) on the kiosk's screen; and in the case of shared check-in workstations an airline's agent (= operator's 4 agent) would log in at the payment terminal to start the check-in for the flight.

As a first sub-process, the operator- and terminal-specific initial-encryption key K6 associated with the operator 4 (e.g. the airline) at issue is selected, depending on the operator associated with the customer or the agent performing the transaction.

In some optional embodiments the payment terminal 1 provides more than one usage modes, or more than one type of "device behavior". The payment terminal 1 is arranged to provide the various types of device behavior. In these embodiments, as a further optional sub-process, when use of the payment terminal 2 is started to perform a transaction, the device behavior associated with the operator at issue is automatically and dynamically selected. For example, two different usage modes may be provided in some embodiments: A "direct-usage mode" and a "delegated-usage mode". In the direct-usage mode the payment terminal 1 is initialized to return all payment data back to an operator application over a serial connection to the operator 4; it is then up to the operator application to transmit the data to the payment provider 2. In the delegated usage-mode the payment terminal 1 is initialized to establish a direct connection over a network interface providing access to a wide-area network (WAN) to the payment provider 2. In embodiments in which the payment terminal 1 to provide the delegated-usage mode the payment terminal 1 is therefore equipped with a suitable network interface, and the payment terminal 1 is pre-configured with network parameters (such as IP, DNS, DHCP, Firewalls, VPN, ..) suitable to communicate directly with the payment provider 2 over the WAN. If the delegated-usage mode is selected, a TCP/IP connection is established to the payment provider's host, and all further configuration messages will be initiated by the payment provider's host using this connection.

The below exemplary XML code shows an example of the initialization of the delegated mode. It can be seen from the exemplary XML code that the automatic selection is controlled by a variable named "<usageMode>" which, in this example, can take the values "delegated" and "direct":

```
      <?xml version="1.0" ?>
      <operatorUsageRequest>
             <operatorCode>M1</operatorCode>
             <paymentProviderCode>P1</paymentProviderCode>
              <usageMode>delegated</usageMode>
              <networkParameters>
                     <host>payment.com</host>
                     <port>1234</port>
                     ...
              </networkParameters>
              <authenticationData>66678d4f0ea8bda1</authenticationData>
       </operatorUsageRequest>
```

As another sub-process, after the operator- and terminal-specific initial-encryption key K6 has been obtained and decrypted at the payment terminal 1 (either in advance, or "on the fly" during the initialization-of-a-transaction stage), transaction keys for further transaction activities can be derived from the decrypted operator- and terminal-specific initial-encryption key K6 using a transaction-specific number 27, which is labeled as S14 in Fig. 4. As indicated by the labeling, the derivation S 14 of the operator- and transaction-specific encryption key K7 from the operator- and terminal-specific initial-encryption key K6 by the payment terminal 1 using the transaction-specific number 27 is one of these transaction keys. The derivation is performed in an analogous manner at the payment provider 2, there labeled as S13.

Further transaction keys, derived from the operator- and transaction-specific encryption key K7 using the transaction-specific number 27 or another transaction-specific number, e.g. a PIN-encryption key, sensitive-data-encryption keys, and MAC-signature keys, are also covered by the activity labeled S13, S14 in Fig. 4.

In Fig. 4, in embodiments in which the payment terminal 1 has an optional usage-mode functionality, the label S14 also represents the optional activity of the operator-dependent selection of the usage mode (e.g. the selection of the direct-usage mode or the delegated-usage mode).

Those further transaction keys are used for encrypting S16 sensitive data for transmission between the payment terminal 1 and the payment provider 2, e.g. a PIN for an account that is to be debited.

Hence, the actual encrypted transmission of sensitive data S17 of the payment transaction 26 between the payment terminal 1 and the payment provider 2 can be performed using the above-mentioned transaction keys.

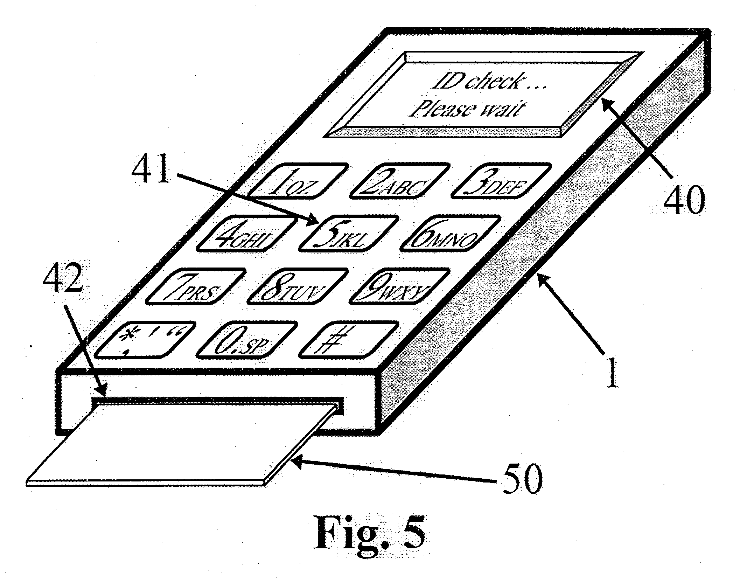

An exemplary payment terminal 1, on which the key injections labeled S9' and S12' in Fig.4 and described in conjunction with Fig. 1 and Fig. 4 are performed, is illustrated in Fig. 5.

The payment terminal 1 shown in Fig. 5 has a PIN pad 41 to accept and encrypt a cardholder's personal identification number (PIN). The PIN pad 41 utilizes access to a payment card 50 (in the case of a chip card) and allows secure entering of the PIN into the payment terminal 1 and subsequent encryption of the PIN by the payment terminal 1.

The PIN is encrypted immediately upon entry and an encrypted PIN block is created. This encrypted PIN block is erased as soon as it has been sent from the PIN pad 41 to the attached payment terminal 1 and/or the chip card 50. The PINs are encrypted using a triple DES algorithm.

The payment terminal 1 is equipped with a display 40 to show relevant data to both the customer, e.g. a passenger, and the operator 4, as for example, a payment-order amount or an authentication status of the entered PIN.

Additionally, the payment terminal 1 is equipped with a payment-card slit reader 42, where the payment card 50 is inserted into the payment terminal 1 and card data is read from the payment card 50, e.g. for verification of the customer's identity, i.e. checking if the customer can provide the correct PIN for the payment card 50.

In alternative embodiments the payment terminal 1 is equipped with a payment-card swipe reader in addition, or as an alternative, to the payment-card slit reader 42. In these alternative embodiments the card data is read from the payment card 50 by swiping the payment card 50 to a swipe-reader's slit.

Fig.6 depicts additional features of the exemplary payment terminal 1 illustrated in Fig. 5. The payment terminal 1 has a memory 43 and a tamper-resistant security module (TRSM) 45. The TRSM 45 can be a logical partition of the memory 43 or can, alternatively, be an individual secure-reading-and-exchange-of-data (SRED) module, on which the individual terminal-specific access, transport, and encryption the key K2, and optionally the encryption keys K4, and K6 are stored. The memory 43 includes a non-volatile memory where executable program code, e.g. compiled C code, and/or interpretable script code is stored.

The payment terminal's unique terminal-identification number 44 is embossed on the housing of the payment terminal 1. In an alternative example of the payment terminal 1, the terminal-identification number 44 is stored on the memory 43 and can be read out by authorized parties. Thereby, the terminal-identification number 44 is not visible to anyone without clearance.

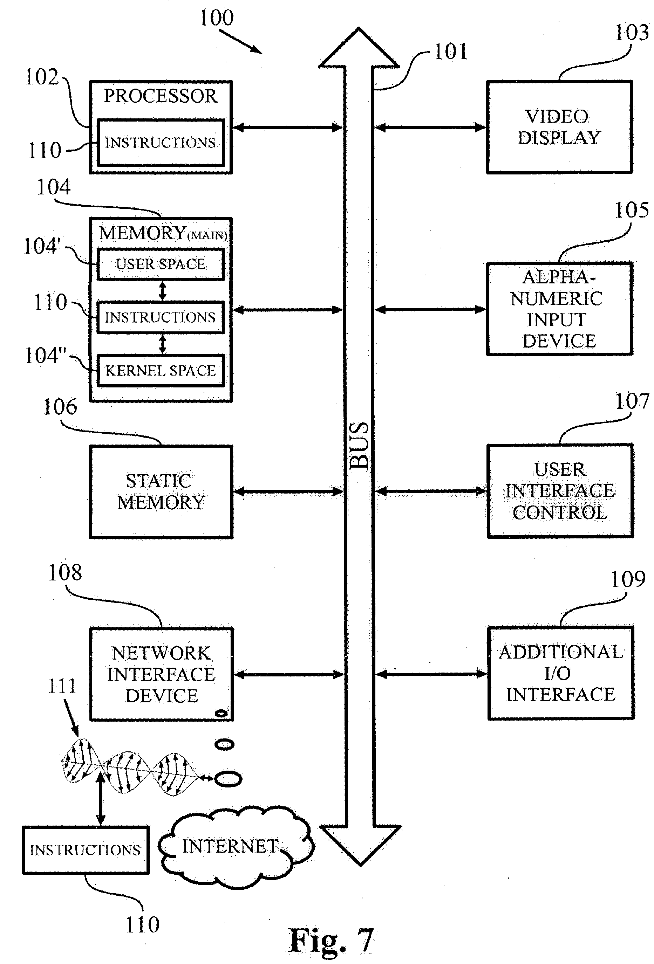

A diagrammatic representation of an exemplary computer system 100 arranged to execute a set of instructions 110, to cause the computer system to perform any of the methodologies used for configuration of a payment terminal 1 for a payment transaction 26, as described herein, is shown in Fig. 7. The computerized controlling-entity system and the computerized payment-provider system may be such a computer system 100.

The computer system 100 includes a processor 102, a main memory 104 and a network interface 108. The main memory 104 includes a user space 104', which is associated with user-run applications, and a kernel space 104", which is reserved for operating-system- and hardware-associated applications. The computer system 100 further includes a static memory 106, e.g. non-removable flash and/or solid state drive and/or a removable Micro or Mini SD card, which permanently stores software enabling the computer system 100 to execute functions of the computer system 100. Furthermore, it may include a video display 103, a user interface control module 107 and/or an alpha-numeric and cursor input device 105. Optionally, additional I/O interfaces 109, such as card reader and USB interfaces may be present. The computer system components 102 to 109 are interconnected by a data bus 101.

In some exemplary embodiments the software programmed to carry out the method of configuring the payment terminal 1 discussed herein is stored on the static memory 106; in other exemplary embodiments external databases are used. The method of configuring the payment terminal 1 discussed herein is performed via the network interface device 108.

An executable set of instructions (i.e. software) 110 embodying any one, or all, of the methodologies described above, resides completely, or at least partially, permanently in the non-volatile memory 106. When the instructions are executed, process data resides in the main memory 104 and/or the processor 102. The software 110 may further be transmitted or received as a propagated signal 111 through the network interface device 108 from/to a software server within a local area network or the Internet.

Although certain methods and products constructed in accordance with the teachings of the invention have been described herein, the scope of coverage of this patent is not limited thereto.

## Claims

1. A method of configuring a payment terminal (1) to become usable as a payment terminal (1) shared by a plurality of operators (4) with cryptographic segregation between the different operators (4) of the payment terminal (1), the payment terminal (1) being arranged to communicate (S17) with at least one payment provider (2) to perform payment transactions (26), and being associated with a controlling entity (3) that controls usage of the payment terminal (1) in an operator-selective manner, the payment terminal (1) having a terminal-specific access key (K2) stored therein, and a terminal-identification number (44), the method comprising:
transmitting an operator- and terminal-specific transport key (K4), encrypted by the terminal-specific access key (K2), to the payment terminal (1);
decrypting the encrypted operator- and terminal-specific transport key (K4) at the payment terminal (1) with the stored terminal-specific access key (K2);
wherein usage of the payment terminal (1) by operators (4) and/or payment providers (2) is granted by the controlling entity (3) remotely, without physical contact with the payment terminal (1), by injecting the operator- and terminal-specific transport key (K4) into the payment terminal (1), i.e. by storing the operator- and terminal-specific transport key (K4) in the payment terminal (1) in an unencrypted or encrypted form;
deriving (S10), by the payment provider (2), an operator- and terminal-specific initial-encryption key (K6) from an operator-specific base-derivation key (K5) using the terminal-identification number (44), or an additional identification number of the payment terminal (1), and symmetrically encrypting (S11) the operator- and terminal-specific initial-encryption key (K6) with the operator- and terminal-specific transport key (K4);
transmitting (S12) the encrypted operator- and terminal-specific initial-encryption key (K6) to the payment terminal (1);
decrypting the encrypted operator- and terminal-specific initial-encryption key (K6) at the payment terminal (1) with the decrypted operator- and terminal-specific transport key (K4);
deriving (S13, S14), both at the payment provider (2) and the payment terminal (1), an operator- and transaction-specific encryption key (K7) from the operator- and terminal-specific initial-encryption key (K6) using a transaction-specific number (27) associated with this transaction (26), when performing a transaction (26) with the payment terminal (1);
performing the transaction (26) with the payment terminal (1).

2. The method of claim 1, wherein the operator- and terminal-specific transport key (K4) is provided to the payment terminal (1) by
transmitting (S6) an operator-specific master-transport key (K3) from the at least one payment provider (2) to the controlling entity (3) in a confidentiality-securing manner and deriving (S5, S7), both at the payment provider (2) and the controlling entity (3), the operator- and terminal-specific transport key (K4) from the operator-specific master-transport key (K3) using the terminal-identification number (44),
symmetrically encrypting (S8), by the controlling entity (3), the operator- and terminal-specific transport key (K4) with the terminal-specific access key (K2), and
transmitting (S9) the encrypted operator- and terminal-specific transport key (K4) to the payment terminal (1),
the controlling entity (3) controlling the usage of the payment terminal (1) in the operator-selective manner by said transmission (S9) of the operator- and terminal-specific transport key (K4).

3. The method of claim 1, wherein the operator- and terminal-specific transport key (K4) is provided to the payment terminal (1) by
deriving (S5) at the payment provider (2) the operator- and terminal-specific transport key (K4) from the operator-specific master-transport key (K3) using the terminal-identification number (44),
transmitting the operator- and terminal-specific transport key (K4) from the at least one payment provider (2) to the controlling entity (3) in a confidentiality-securing manner,
symmetrically encrypting (S8), by the controlling entity (3), the operator- and terminal-specific transport key (K4) with the terminal-specific access key (K2), and
transmitting (S9) the encrypted operator- and terminal-specific transport key (K4) to the payment terminal (1),
the controlling entity (3) controlling the usage of the payment terminal (1) in the operator-selective manner by said transmission (S9) of the operator- and terminal-specific transport key (K4).

4. The method of any one of claims 1 to 3, wherein
the encrypted operator- and terminal-specific transport key (K4) is decrypted with the terminal-specific access key (K2) at the payment terminal (1) upon receipt, and the decrypted operator- and terminal-specific transport key (K4) is stored in a secure storage (TRSM) of the payment terminal (1); or
the received encrypted operator- and terminal-specific transport key (K4) is first stored in the payment terminal (1) in its encrypted form and is only later decrypted with the terminal-specific access key (K2) at the payment terminal (1) when the decrypted operator- and terminal-specific transport key (K4) is required for the decryption of the encrypted operator- and terminal-specific initial-encryption key (K6) to perform the transaction (26) with the payment terminal (1).

5. The method of any one of claims 1 to 4, wherein
the encrypted operator- and terminal-specific initial-encryption key (K6) is decrypted with the operator- and terminal-specific transport key (K4) at the payment terminal (1) upon receipt, and the decrypted operator- and terminal-specific initial-encryption key (K6) is stored in a secure storage (TRSM) of the payment terminal (1); or
the encrypted operator- and terminal-specific initial-encryption key (K6) is stored in the payment terminal (1) in its encrypted form upon receipt, and is only later decrypted with the operator- and terminal-specific transport key (K4) at the payment terminal (1) when the decrypted operator- and terminal-specific initial-encryption key (K6) is required for obtaining the operator- and transaction-specific encryption key (K7) using the decrypted operator- and terminal-specific initial-encryption key (K6) to perform the transaction (26) with the payment terminal (1).

6. The method of any one of claims 1 to 5, wherein the at least one payment provider (2) is a single payment-gateway provider, or the at least one payment provider (2) is one of a plurality of payment providers (2).

7. The method of any one of claims 1 to 6, wherein at least one of the terminal-specific access key (K2), the operator-specific master-transport key (K3), the operator- and terminal-specific transport key (K4), the operator-specific base-derivation key (K5), the operator- and terminal-specific initial-encryption key (K6), and the operator- and transaction-specific encryption key (K7) is a symmetric-encryption key.

8. The method of claim 7, wherein the at least one symmetric-encryption key is a triple key according to the Triple Data Encryption Algorithm (TDEA).

9. The method of any one of claims 1 to 8, wherein
the payment terminal (1) is arranged to provide at least two usage modes, a direct-usage mode in which transaction data is exchanged between the payment terminal (1) and one of the operators (4), and a delegated-usage mode in which transaction data is exchanged between the payment terminal (1) and at least one payment provider (2), the payment-terminal being pre-configured by an assignment of usage modes to operators of the plurality of operators (4), and
upon one of the operators (4) of the plurality of operators (4) starting to use the payment terminal (1) the usage mode assigned to this operator (4) is automatically selected by the payment terminal (1), and the payment terminal (1) performs the transaction (26) using the selected usage mode.

10. The method of any one of claims 1 to 9, wherein the terminal-specific access key (K2) used by the controlling entity (3) for symmetric encryption (S8) is derived (S1) from a controlling-entity-specific master-access key (K1) using the terminal-identification number (44), or an additional identification number of the payment terminal (1).

11. The method of any one of claims 1 to 10, wherein the terminal-specific access key (K2) is stored in the payment terminal (1) after being transmitted (S4) to the payment terminal (1) in a confidentiality-securing manner by a terminal provider (5).

12. The method of claim 11, wherein the terminal-specific access key (K2) is derived (S3), by the terminal provider (5), from a controlling-entity-specific master-access key (K1) by using the terminal-identification number (44), or an additional identification number of the payment terminal (1).

13. The method of claim 12, wherein the controlling-entity-specific master-access key (K1) is transmitted (S2) to the terminal provider (5) in a confidentiality-securing manner by the controlling entity (3).

14. A system comprising a computerized controlling-entity system, a computerized payment-provider system, and at least one payment terminal (1), wherein the system is arranged to configure the at least one payment terminal (1) to be usable as a payment terminal (1) shared between a plurality of operators (4) with cryptographic segregation between the different operators (4) of the payment terminal (1) and arranged to communicate with an operator (4) or at least one payment provider (2) to perform payment transactions (26) and arranged to be associated with a controlling-entity system that controls usage of the payment terminal (1) in an operator-selective manner remotely, without physical contact with the payment terminal (1), by injecting the operator- and terminal-specific transport key (K4) into the payment terminal (1), i.e. by storing the operator- and terminal-specific transport key (K4) in the payment terminal (1) in an unencrypted or encrypted form, the payment terminal (1) being arranged to store a terminal-identification number (44), the payment terminal (1) comprising at least one tamper-resistant security module (TRSM) (45) arranged to store a terminal-specific access key (K2) to enable usage of the payment terminal (1) to be controlled by the controlling-entity system in the operator-selective manner, wherein the system is arranged to
receive, at the payment terminal (1), an operator- and terminal-specific transport key (K4), encrypted by the terminal-specific access key (K2); and
decrypt, at the payment terminal (1), the encrypted operator- and terminal-specific transport key (K4) with the stored terminal-specific access key (K2); and
receive, at the payment terminal (1) from the payment-provider system, an operator- and terminal-specific initial-encryption key (K6) derived (S10) from an operator-specific base-derivation key (K5) based on the terminal-identification number (44), or an additional identification number of the payment terminal (1), which is symmetrically encrypted by the operator- and terminal-specific transport key (K4); and
decrypt, at the payment terminal (1), the encrypted operator- and terminal-specific initial-encryption key (K6) with the decrypted operator- and terminal-specific transport key (K4); and
derive (S13, S14), both at the payment-provider system and at the payment terminal (1), an operator- and transaction-specific encryption key (K7) from the operator- and terminal-specific initial-encryption key (K6) using a transaction-specific number (27) associated with this transaction (26), when performing a transaction (26) with the payment terminal (1); and
perform the transaction (26) with the payment terminal (1).

15. The system of claim 14, wherein the at least one tamper-resistant security module (TRSM) is also arranged to store at least one of:
at least one operator- and terminal-specific transport key (K4) for decrypting a symmetrically encrypted operator-specific key, and
at least one operator- and terminal-specific initial-encryption key (K6) for deriving (S14) an operator- and transaction-specific encryption key (K7).

16. The system of claim 14 or 15 further arranged to configure the at least one payment terminal (1) according to any one of claims 2 to 13.

## Patentansprüche

1. Verfahren zum Einrichten eines Zahlungsendgeräts (1), um als ein von mehreren Betreibern (4) gemeinsam genutztes Zahlungsendgerät (1) mit kryptographischer Trennung zwischen den verschiedenen Betreibern (4) des Zahlungsendgeräts (1) verwendbar zu werden, wobei das Zahlungsendgerät (1) dazu eingerichtet ist, mit wenigstens einem Zahlungsanbieter (2) zu kommunizieren (S17), um Zahlungstransaktionen (26) durchzuführen, und einer Kontrolleinheit (3) zugeordnet zu sein, die die Verwendung des Zahlungsendgeräts (1) auf eine betreiberselektive Weise steuert, das Zahlungsendgerät (1) weist einen darin gespeicherten endgerätspezifischen Zugangsschlüssel (K2) und eine Endgeräteidentifikationsnummer (44) auf, wobei das Verfahren umfasst:
Übertragen eines betreiber- und endgerätespezifischen Transportschlüssels (K4), verschlüsselt durch den endgerätespezifischen Zugangsschlüssel (K2) zum Zahlungsendgerät (1);
Entschlüsseln des verschlüsselten betreiber- und endgerätespezifischen Transportschlüssels (K4) mit dem gespeicherten endgerätespezifischen Zugangsschlüssel (K2) an dem Zahlungsendgerät (1);
wobei die Verwendung des Zahlungsendgeräts (1) durch Betreiber (4) und/oder Zahlungsanbieter (2) von der Kontrolleinheit (3) aus der Ferne, ohne physischen Kontakt mit dem Zahlungsendgerät (1), durch Einspeisen des betreiber- und endgerätespezifischen Transportschlüssels (K4) in das Zahlungsterminal (1) gewährt wird, d.h. durch Speichern des betreiber- und endgerätespezifischen Transportschlüssels (K4) im Zahlungsendgerät (1) in unverschlüsselter oder verschlüsselter Form;
Ableiten (S10) eines betreiber- und endgerätespezifischen Anfangsverschlüsselungsschlüssels (K6) von einem betreiberspezifischen Basisableitungsschlüssel (K5) durch den Zahlungsanbieter (2) unter Verwendung der Endgeräteidentifikationsnummer (44), oder einer zusätzlichen Identifikationsnummer des Zahlungsendgeräts (1) und symmetrisches Verschlüsseln (S11) des betreiber- und endgerätespezifischen Anfangsverschlüsselungsschlüssels (K6) mit dem betreiber- und endgerätespezifischen Transportschlüssel (K4);
Übertragen (S12) des verschlüsselten betreiber- und endgerätespezifischen Anfangsverschlüsselungsschlüssels (K6) an das Zahlungsendgerät (1);
Entschlüsseln des verschlüsselten betreiber- und endgerätespezifischen Anfangsverschlüsselungsschlüssels (K6) an dem Zahlungsendgerät (1) mit dem entschlüsselten betreiber- und endgerätespezifischen Transportschlüssel (K4);
Ableiten (S13, S14) eines betreiber- und transaktionsspezifischen Verschlüsselungsschlüssel (K7) aus dem betreiber- und endgerätespezifischen Anfangsverschlüsselungsschlüssels (K6) sowohl beim Zahlungsanbieter (2) als auch an dem Zahlungsendgerät (1) unter Verwendung einer transaktionsspezifischen Nummer (27), die mit dieser Transaktion (26) verknüpft ist, wenn eine Transaktion (26) mit dem Zahlungsendgerät (1) durchgeführt wird;
Durchführen der Transaktion (26) mit dem Zahlungsendgerät (1).

2. Verfahren nach Anspruch 1, wobei der betreiber- und endgerätespezifische Transportschlüssel (K4) dem Zahlungsendgerät (1) zur Verfügung gestellt wird durch
Übertragen (S6) eines betreiberspezifischen Haupttransportschlüssels (K3) von dem wenigstens einen Zahlungsanbieter (2) an die Kontrolleinheit (3) auf eine die Vertraulichkeit sichernde Weise und ableiten (S5, S7) des betreiber- und endgerätespezifischen Transportschlüssels (K4) aus dem betreiberspezifischen Haupttransportschlüssel (K3) unter Verwendung der Endgeräteidentifikationsnummer (44) sowohl beim Zahlungsanbieter (2) als auch bei der Kontrolleinheit (3),
symmetrisches Verschlüsseln (S8) des betreiber- und endgerätespezifischen Transportschlüssels (K4) mit dem endgerätespezifischen Zugangsschlüssel (K2) durch die Kontrolleinheit (3) und
Übertragen (S9) des verschlüsselten betreiber- und endgerätespezifischen Transportschlüssels (K4) an das Zahlungsendgerät (1),
wobei die Kontrolleinheit (3) die Verwendung des Zahlungsendgeräts (1) auf die betreiberselektive Weise durch die Übertragung (S9) des betreiber- und endgerätspezifischen Transportschlüssels (K4) steuert.

3. Verfahren nach Anspruch 1, wobei der betreiber- und endgerätespezifische Transportschlüssel (K4) dem Zahlungsendgerät (1) zur Verfügung gestellt wird durch
Ableiten (S5) des betreiber- und endgerätespezifischen Transportschlüssels (K4) von dem betreiberspezifischen Haupttransportschlüssel (K3) unter Verwendung der Endgeräteidentifikationsnummer (44) beim Zahlungsanbieter (2),
Übertragen des betreiber- und endgerätespezifischen Transportschlüssels (K4) von dem wenigstens einen Zahlungsanbieter (2) an die Kontrolleinheit (3) in einer die Vertraulichkeit sichernden Weise,
symmetrisches Verschlüsseln (S8) des betreiber- und endgerätespezifischen Transportschlüssels (K4) mit dem endgerätespezifischen Zugangsschlüssel (K2) durch die Kontrolleinheit (3) und
Übertragen (S9) des verschlüsselten betreiber- und endgerätespezifischen Transportschlüssels (K4) an das Zahlungsendgerät (1),
wobei die Kontrolleinheit (3) die Verwendung des Zahlungsendgeräts (1) auf die betreiberselektive Weise durch die Übertragung (S9) des betreiber- und endgerätspezifischen Transportschlüssels (K4) steuert.

4. Verfahren nach einem der Ansprüche 1 bis 3, wobei
der verschlüsselte betreiber- und endgerätespezifische Transportschlüssel (K4) an dem Zahlungsendgerät (1) mit dem endgerätespezifischen Zugangsschlüssel (K2) beim Empfang entschlüsselt wird und der entschlüsselte betreiber- und endgerätespezifische Transportschlüssel (K4) in einem sicheren Speicher (TRSM) des Zahlungsendgeräts (1) gespeichert wird; oder
der empfangene verschlüsselte betreiber- und endgerätespezifische Transportschlüssel (K4) zunächst in seiner verschlüsselten Form im Zahlungsendgerät (1) gespeichert wird und erst später mit dem endgerätespezifischen Zugangsschlüssel (K2) an dem Zahlungsendgerät (1) entschlüsselt wird, wenn der entschlüsselte betreiber- und endgerätespezifische Transportschlüssel (K4) für die Entschlüsselung des verschlüsselten betreiber- und endgerätespezifischen Anfangsverschlüsselungsschlüssels (K6) benötigt wird, um die Transaktion (26) mit dem Zahlungsendgerät (1) durchzuführen.

5. Verfahren nach einem der Ansprüche 1 bis 4, wobei
der verschlüsselte betreiber- und endgerätespezifische Anfangsverschlüsselungsschlüssel (K6) an dem Zahlungsendgerät (1) mit dem betreiber- und endgerätespezifischen Transportschlüssel (K4) beim Empfang entschlüsselt wird und der entschlüsselte betreiber- und endgerätespezifische Anfangsverschlüsselungsschlüssel (K6) ist in einem sicheren Speicher (TRSM) des Zahlungsendgeräts (1) gespeichert wird; oder
der verschlüsselte betreiber- und endgerätespezifische Anfangsverschlüsselungsschlüssel (K6) beim Empfang in seiner verschlüsselter Form im Zahlungsendgerät (1) gespeichert wird und erst später mit dem betreiber- und endgerätespezifischen Transportschlüssel (K4) an dem Zahlungsendgerät (1) entschlüsselt wird, wenn der entschlüsselte betreiber- und endgerätespezifische Anfangsverschlüsselungsschlüssel (K6) erforderlich ist, um den betreiber- und transaktionsspezifischen Verschlüsselungsschlüssel (K7) unter Verwendung des entschlüsselten betreiber- und endgerätespezifischen Anfangsverschlüsselungsschlüssel (K6) zum Ausführen der Transaktion (26) mit dem Zahlungsendgerät (1) zu erhalten.

6. Verfahren nach einem der Ansprüche 1 bis 5, wobei der wenigstens eine Zahlungsanbieter (2) ein einziger Zahlungs-Gateway-Anbieter ist, oder der wenigstens eine Zahlungsanbieter (2) einer von mehreren Zahlungsanbietern (2) ist.

7. Verfahren nach einem der Ansprüche 1 bis 6, wobei wenigstens einer folgenden Schlüssel ein symmetrischer Verschlüsselungsschlüssel ist: endgerätespezifischer Zugangsschlüssel (K2), betreiberspezifischer Haupttransportschlüssel (K3), betreiber- und terminalspezifischer Transportschlüssel (K4), betreiberspezifischer Basisableitungsschlüssel (K5), betreiber- und terminalspezifischer Anfangsverschlüsselungsschlüssel (K6) und betreiber- und transaktionsspezifischer Verschlüsselungsschlüssel (K7).

8. Verfahren nach Anspruch 7, wobei der wenigstens eine symmetrische Verschlüsselungsschlüssel ein Dreifachschlüssel gemäß dem Triple-Data-Encryption Algorithmus (TDEA) ist.

9. Verfahren nach einem der Ansprüche 1 bis 8, wobei
das Zahlungsendgerät (1) dazu eingerichtet ist wenigstens zwei Betriebsarten bereitzustellen, einen Direktnutzungsmodus, in dem Transaktionsdaten zwischen dem Zahlungsendgerät (1) und einem der Betreiber (4) ausgetauscht werden, und einen Delegationsnutzungsmodus, in dem Transaktionsdaten zwischen dem Zahlungsendgerät (1) und wenigstens einem Zahlungsanbieter(2) ausgetauscht werden, wobei das Zahlungsendgerät durch eine Zuordnung von Nutzungsmodi zu Betreibern aus der Mehrzahl von Betreibern (4) vorkonfiguriert ist, und
wenn einer der Betreiber (4) der Mehrzahl von Betreibern (4) beginnt das Zahlungsendgerät (1) zu benutzen, wird der diesem Betreiber (4) zugewiesene Nutzungsmodus automatisch durch das Zahlungsendgerät (1) ausgewählt und das Zahlungsendgerät (1) führt die Transaktion (26) unter Verwendung des ausgewählten Nutzungsmodus aus.

10. Verfahren nach einem der Ansprüche 1 bis 9, wobei der endgerätespezifische Zugangsschlüssel (K2), der von der Kontrolleinheit (3) zur symmetrischen Verschlüsselung (S8) verwendet wird, von einem kontrolleinheitenspezifischen Hauptzugangsschlüssel (K1) unter Verwendung der Endgeräteidentifikationsnummer (44) oder einer zusätzlichen Identifikationsnummer des Zahlungsendgeräts (1) abgeleitet (S1) wird.

11. Verfahren nach einem der Ansprüche 1 bis 10, wobei der endgerätespezifische Zugangsschlüssel (K2), nachdem er von einem Endgeräteanbieter (5) in einer die Vertraulichkeit sichernden Weise an das Zahlungsendgerät (1) übertragen (S4) wurde, in dem Zahlungsendgerät (1) gespeichert wird.

12. Verfahren nach Anspruch 11, wobei der endgerätespezifische Zugangsschlüssel (K2) von dem Endgerätanbieter (5) von einem kontrolleinheitenspezifischen Hauptzugangsschlüssel (K1) unter Verwendung der Endgeräteidentifikationsnummer (44) oder einer zusätzlichen Identifikationsnummer des Zahlungsendgeräts (1) abgeleitet (S3) wird.

13. Verfahren nach Anspruch 12, wobei der kontrolleinheitenspezifische Hauptzugangsschlüssel (K1) von der Kontrolleinheit (3) in einer die Vertraulichkeit sichernden Weise an den Endgeräteanbieter (5) übertragen (S2) wird.

14. System, umfassend ein computergestütztes Kontrolleinheitssystem, ein computergestütztes Zahlungsanbietersystem und wenigstens ein Zahlungsendgerät (1), wobei das System dazu eingerichtet ist, das wenigstens eine Zahlungsendgerät (1) so zu konfigurieren, dass es als ein von mehreren Betreibern (4) gemeinsam genutztes Zahlungsendgerät (1) mit kryptographischer Trennung zwischen den verschiedenen Betreibern (4) des Zahlungsendgeräts (1) verwendbar ist, und mit einem Betreiber (4) oder wenigstens einem Zahlungsanbieter (2) zu kommunizieren um Zahlungstransaktionen (26) durchzuführen und um mit einem Kontrolleinheitssystem verknüpft zu sein, welches die Verwendung des Zahlungsendgeräts (1) auf eine betreiberselektive Weise aus der Ferne, ohne physischen Kontakt mit dem Zahlungsendgerät (1), durch Einspeisen des betreiber- und endgerätspezifischen Transportschlüssels (K4) in das Zahlungsendgerät (1), steuert, d.h. durch Speichern des betreiber- und endgerätspezifischen Transportschlüssels (K4) in dem Zahlungsendgerät (1) in unverschlüsselter oder verschlüsselter Form, das Zahlungsendgerät (1) ist dazu eingerichtet eine Endgeräteidentifikationsnummer (44) zu speichern, wobei das Zahlungsendgerät (1) wenigstens ein manipulationsbeständiges Sicherheitsmodul (TRSM) (45) umfasst, das eingerichtet ist, einen endgerätespezifischen Zugangsschlüssel (K2) zu speichern, um die Verwendung des Zahlungsendgeräts (1) durch das Kontrolleinheitssystem in der betreiberselektiven Weise zu steuern, wobei das System dazu eingerichtet ist, um
an dem Zahlungsendgerät (1) einen betreiber- und endgerätespezifischen Transportschlüssel (K4), verschlüsselt durch den endgerätespezifischen Zugangsschlüssel (K2), zu empfangen; und
den verschlüsselten betreiber- und endgerätespezifischen Transportschlüssel (K4) mit dem gespeicherten endgerätespezifischen Zugangsschlüssel (K2) an dem Zahlungsendgerät (1) zu entschlüsseln; und
an dem Zahlungsendgerät (1) von dem Zahlungsanbietersystem einen von einem betreiberspezifischen Basisableitungsschlüssel (K5) beruhend auf der Endgeräteidentifikationsnummer (44) oder einer zusätzlichen Identifikationsnummer des Zahlungsendgeräts (1) abgeleiteten (S10) betreiber- und endgerätespezifischen Anfangsverschlüsselungsschlüssel (K6) zu erhalten, der durch den betreiber- und endgerätespezifischen Transportschlüssel (K4) symmetrisch verschlüsselt ist; und
an dem Zahlungsendgerät (1) den verschlüsselten betreiber- und endgerätespezifischen Anfangsverschlüsselungsschlüssel (K6) mit dem entschlüsselten betreiber- und endgerätespezifischen Transportschlüssel (K4) zu entschlüsseln; und
sowohl bei dem Zahlungsanbietersystem als auch an dem Zahlungsendgerät (1) einen betreiber- und transaktionsspezifischen Verschlüsselungsschlüssel (K7) von dem betreiber- und endgerätespezifischen Anfangsverschlüsselungsschlüssel (K6) unter Verwendung einer transaktionsspezifischen Nummer (27), die mit dieser Transaktion (26) verknüpft ist, abzuleiten (S13, S14), wenn eine Transaktion (26) mit dem Zahlungsendgerät (1) durchgeführt wird; und
die Transaktion (26) mit dem Zahlungsendgerät (1) durchzuführen.

15. System nach Anspruch 14, wobei das wenigstens eine manipulationsbeständige Sicherheitsmodul (TRSM) auch dazu eingerichtet ist, um wenigstens eines der folgenden zu speichern:
wenigstens einen betreiber- und endgerätespezifischen Transportschlüssel (K4) zum Entschlüsseln eines symmetrisch verschlüsselten betreiberspezifischen Schlüssels, und
wenigstens einen betreiber- und endgerätespezifischen Anfangsverschlüsselungsschlüssel (K6) zum Ableiten (S14) eines betreiber- und transaktionsspezifischen Verschlüsselungsschlüssels (K7).

16. System nach Anspruch 14 oder 15, das ferner dazu eingerichtet ist, das wenigstens eine Zahlungsendgerät (1) nach einem der Ansprüche 2 bis 13 zu konfigurieren.

## Revendications

1. Procédé de configuration d'un terminal de paiement (1) pour qu'il devienne utilisable comme terminal de paiement (1) partagé par une pluralité d'opérateurs (4) avec une ségrégation cryptographique entre les différents opérateurs (4) du terminal de paiement (1), le terminal de paiement (1) étant agencé pour communiquer (S17) avec au moins un fournisseur de paiement (2) pour effectuer des transactions de paiement (26), et étant associé à une entité de commande (3) qui commande l'utilisation du terminal de paiement (1) d'une manière sélective par l'opérateur, le terminal de paiement (1) contenant une clé d'accès spécifique au terminal (K2) stockée dans celui-ci, et un numéro d'identification de terminal (44), le procédé comprenant :
la transmission d'une clé de transport spécifique à l'opérateur et au terminal (K4), chiffrée par la clé d'accès spécifique au terminal (K2), au terminal de paiement (1) ;
le déchiffrement de la clé de transport spécifique à l'opérateur et au terminal (K4) chiffrée au niveau du terminal de paiement (1) avec la clé d'accès spécifique au terminal (K2) stockée ;
dans lequel l'utilisation du terminal de paiement (1) par des opérateurs (4) et/ou des fournisseurs de paiement (2) est octroyée par l'entité de commande (3) à distance, sans contact physique avec le terminal de paiement (1), en injectant la clé de transport spécifique à l'opérateur et au terminal (K4) dans le terminal de paiement (1), c.-à-d. en stockant la clé de transport spécifique à l'opérateur et au terminal (K4) dans le terminal de paiement (1) sous forme non chiffrée ou chiffrée ;
la dérivation (S10), par le fournisseur de paiement (2), d'une clé de chiffrement initial spécifique à l'opérateur et au terminal (K6) à partir d'une clé de dérivation de base spécifique à l'opérateur (K5) en utilisant le numéro d'identification de terminal (44), ou un numéro d'identification additionnel du terminal de paiement (1), et le chiffrement symétrique (S11) de la clé de chiffrement initial spécifique à l'opérateur et au terminal (K6) avec la clé de transport spécifique à l'opérateur et au terminal (K4) ;
la transmission (S12) de la clé de chiffrement initial spécifique à l'opérateur et au terminal (K6) chiffrée au terminal de paiement (1) ;
le déchiffrement de la clé de chiffrement initial spécifique à l'opérateur et au terminal (K6) chiffrée au niveau du terminal de paiement (1) avec la clé de transport spécifique à l'opérateur et au terminal (K4) déchiffrée ;
la dérivation (S13, S14), à la fois au niveau du fournisseur de paiement (2) et du terminal de paiement (1), d'une clé de chiffrement spécifique à l'opérateur et à la transaction (K7) à partir de la clé de chiffrement initial spécifique à l'opérateur et au terminal (K6) en utilisant un numéro spécifique à la transaction (27) associé à cette transaction (26), lors de l'exécution d'une transaction (26) avec le terminal de paiement (1) ;
l'exécution de la transaction (26) avec le terminal de paiement (1).

2. Procédé selon la revendication 1, dans lequel la clé de transport spécifique à l'opérateur et au terminal (K4) est fournie au terminal de paiement (1) en
transmettant (S6) une clé de transport maître spécifique à l'opérateur (K3) de l'au moins un fournisseur de paiement (2) à l'entité de commande (3) d'une manière sécurisant la confidentialité et dérivant (S5, S7), à la fois au niveau du fournisseur de paiement (2) et de l'entité de commande (3), la clé de transport spécifique à l'opérateur et au terminal (K4) de la clé de transport maître spécifique à l'opérateur (K3) en utilisant le numéro d'identification de terminal (44),
chiffrant symétriquement (S8), par l'entité de commande (3), la clé de transport spécifique à l'opérateur et au terminal (K4) avec la clé d'accès spécifique au terminal (K2), et
transmettant (S9) la clé de transport spécifique à l'opérateur et au terminal (K4) chiffrée au terminal de paiement (1),
l'entité de commande (3) commandant l'utilisation du paiement terminal (1) de la manière sélective par l'opérateur par ladite transmission (S9) de la clé de transport spécifique à l'opérateur et au terminal (K4).

3. Procédé selon la revendication 1, dans lequel la clé de transport spécifique à l'opérateur et au terminal (K4) est fournie au terminal de paiement (1) en
dérivant (S5) au niveau du fournisseur de paiement (2) la clé de transport spécifique à l'opérateur et au terminal (K4) de la clé de transport maître spécifique à l'opérateur (K3) en utilisant le numéro d'identification de terminal (44),
transmettant la clé de transport spécifique à l'opérateur et au terminal (K4) de l'au moins un fournisseur de paiement (2) à l'entité de commande (3) d'une manière sécurisant la confidentialité,
chiffrant symétriquement (S8), par l'entité de commande (3), la clé de transport spécifique à l'opérateur et au terminal (K4) avec la clé d'accès spécifique au terminal (K2), et
transmettant (S9) la clé de transport spécifique à l'opérateur et au terminal (K4) chiffrée au terminal de paiement (1),
l'entité de commande (3) commandant l'utilisation du terminal de paiement (1) de la manière sélective par l'opérateur par ladite transmission (S9) de la clé de transport spécifique à l'opérateur et au terminal (K4).

4. Procédé selon l'une quelconque des revendications 1 à 3, dans lequel
la clé de transport spécifique à l'opérateur et au terminal (K4) chiffrée est déchiffrée avec la clé d'accès spécifique au terminal (K2) au niveau du terminal de paiement (1) lors de la réception, et la clé de transport spécifique à l'opérateur et au terminal (K4) déchiffrée est stockée dans un stockage sécurisé (TRSM) du terminal de paiement (1) ; ou
la clé de transport spécifique à l'opérateur et au terminal (K4) chiffrée reçue est d'abord stockée dans le terminal de paiement (1) sous sa forme chiffrée et n'est déchiffrée ultérieurement qu'avec la clé d'accès spécifique au terminal (K2) au niveau du terminal de paiement (1) lorsque la clé de transport spécifique à l'opérateur et au terminal (K4) déchiffrée est requise pour le déchiffrement de la clé de chiffrement initial spécifique à l'opérateur et au terminal (K6) chiffrée pour effectuer la transaction (26) avec le terminal de paiement (1).

5. Procédé selon l'une quelconque des revendications 1 à 4, dans lequel
la clé de chiffrement initial spécifique à l'opérateur et au terminal (K6) chiffrée est déchiffrée avec la clé de transport spécifique à l'opérateur et au terminal (K4) au niveau du terminal de paiement (1) lors de la réception, et la clé de chiffrement initial spécifique à l'opérateur et au terminal (K6) déchiffrée est stockée dans un stockage sécurisé (TRSM) du terminal de paiement (1) ; ou
la clé de chiffrement initial spécifique à l'opérateur et au terminal (K6) chiffrée est stockée dans le terminal de paiement (1) sous sa forme chiffrée lors de la réception, et n'est déchiffrée ultérieurement qu'avec la clé de transport spécifique à l'opérateur et au terminal (K4) au niveau du terminal de paiement (1) lorsque la clé de chiffrement initial spécifique à l'opérateur et au terminal (K6) déchiffrée est requise pour obtenir la clé de chiffrement spécifique à l'opérateur et à la transaction (K7) en utilisant la clé de chiffrement initial spécifique à l'opérateur et au terminal (K6) déchiffrée pour effectuer la transaction (26) avec le terminal de paiement (1).

6. Procédé selon l'une quelconque des revendications 1 à 5, dans lequel l'au moins un fournisseur de paiement (2) est un fournisseur de passerelle de paiement unique, ou l'au moins un fournisseur de paiement (2) est l'un d'une pluralité de fournisseurs de paiement (2).

7. Procédé selon l'une quelconque des revendications 1 à 6, dans lequel au moins l'une parmi la clé d'accès spécifique au terminal (K2), la clé de transport maître spécifique à l'opérateur (K3), la clé de transport spécifique à l'opérateur et au terminal (K4), la clé de dérivation de base spécifique à l'opérateur (K5), la clé de chiffrement initial spécifique à l'opérateur et au terminal (K6), et la clé de chiffrement spécifique à l'opérateur et à la transaction (K7) est une clé de chiffrement symétrique.

8. Procédé selon la revendication 7, dans lequel l'au moins une clé de chiffrement symétrique est une clé triple selon l'Algorithme de Chiffrement de Données Triple (TDEA).

9. Procédé selon l'une quelconque des revendications 1 à 8, dans lequel
le terminal de paiement (1) est agencé pour fournir au moins deux modes d'utilisation, un mode d'utilisation directe dans lequel des données de transaction sont échangées entre le terminal de paiement (1) et l'un des opérateurs (4), et un mode d'utilisation déléguée dans lequel des données de transaction sont échangées entre le terminal de paiement (1) et au moins un fournisseur de paiement (2), le terminal de paiement étant préconfiguré par une assignation de modes d'utilisation à des opérateurs de la pluralité d'opérateurs (4), et
lorsque l'un des opérateurs (4) de la pluralité d'opérateurs (4) commence à utiliser le terminal de paiement (1) le mode d'utilisation assigné à cet opérateur (4) est sélectionné automatiquement par le terminal de paiement (1), et le terminal de paiement (1) effectue la transaction (26) en utilisant le mode d'utilisation sélectionné.

10. Procédé selon l'une quelconque des revendications 1 à 9, dans lequel la clé d'accès spécifique au terminal (K2) utilisée par l'entité de commande (3) pour le chiffrement symétrique (S8) est dérivée (S1) d'une clé d'accès maître spécifique à l'entité de commande (K1) en utilisant le numéro d'identification de terminal (44), ou un numéro d'identification additionnel du terminal de paiement (1) .

11. Procédé selon l'une quelconque des revendications 1 à 10, dans lequel la clé d'accès spécifique au terminal (K2) est stockée dans le terminal de paiement (1) après avoir été transmise (S4) au terminal de paiement (1) d'une manière sécurisant la confidentialité par un fournisseur de terminal (5).

12. Procédé selon la revendication 11, dans lequel la clé d'accès spécifique au terminal (K2) est dérivée (S3), par le fournisseur de terminal (5), d'une clé d'accès maître spécifique à l'entité de commande (K1) en utilisant le numéro d'identification de terminal (44), ou un numéro d'identification additionnel du terminal de paiement (1).

13. Procédé selon la revendication 12, dans lequel la clé d'accès maître spécifique à l'entité de commande (K1) est transmise (S2) au fournisseur de terminal (5) d'une manière sécurisant la confidentialité par l'entité de commande (3).

14. Système comprenant un système d'entité de commande informatisé, un système de fournisseur de paiement informatisé, et au moins un terminal de paiement (1), dans lequel le système est agencé pour configurer l'au moins un terminal de paiement (1) pour qu'il soit utilisable comme un terminal de paiement (1) partagé entre une pluralité d'opérateurs (4) avec une ségrégation cryptographique entre les différents opérateurs (4) du terminal de paiement (1) et agencé pour communiquer avec un opérateur (4) ou au moins un fournisseur de paiement (2) pour effectuer des transactions de paiement (26) et agencé pour être associé à un système d'entité de commande qui commande l'utilisation du terminal de paiement (1) d'une manière sélective par l'opérateur à distance, sans contact physique avec le terminal de paiement (1), en injectant la clé de transport spécifique à l'opérateur et au terminal (K4) dans le terminal de paiement (1), c'est-à-dire en stockant la clé de transport spécifique à l'opérateur et au terminal (K4) dans le terminal de paiement (1) sous forme non chiffrée ou chiffrée, le terminal de paiement (1) étant agencé pour stocker un numéro d'identification de terminal (44), le terminal de paiement (1) comprenant au moins un module de sécurité inviolable (TRSM) (45) agencé pour stocker une clé d'accès spécifique au terminal (K2) pour permettre que l'utilisation du terminal de paiement (1) soit commandée par le système d'entité de commande de la manière sélective par l'opérateur, dans lequel le système est agencé pour
recevoir, au niveau du terminal de paiement (1), une clé de transport spécifique à l'opérateur et au terminal (K4), chiffrée par la clé d'accès spécifique au terminal (K2) ; et
déchiffrer, au niveau du terminal de paiement (1), la clé de transport spécifique à l'opérateur et au terminal (K4) chiffrée avec la clé d'accès spécifique au terminal (K2) stockée ; et
recevoir, au niveau du terminal de paiement (1) en provenance du système de fournisseur de paiement, une clé de chiffrement initial spécifique à l'opérateur et au terminal (K6) dérivée (S10) d'une clé de dérivation de base spécifique à l'opérateur (K5) sur la base du numéro d'identification de terminal (44), ou d'un numéro d'identification additionnel du terminal de paiement (1), qui est chiffré symétriquement par la clé de transport spécifique à l'opérateur et au terminal (K4) ; et
déchiffrer, au niveau du terminal de paiement (1), la clé de chiffrement initial spécifique à l'opérateur et au terminal (K6) chiffrée avec la clé de transport spécifique à l'opérateur et au terminal (K4) déchiffrée ; et
dériver (S13, S14), à la fois au niveau du système de fournisseur de paiement et au niveau du terminal de paiement (1), une clé de chiffrement spécifique à l'opérateur et à la transaction (K7) de la clé de chiffrement initial spécifique à l'opérateur et au terminal (K6) en utilisant un numéro spécifique à la transaction (27) associé à cette transaction (26), lors de l'exécution d'une transaction (26) avec le terminal de paiement (1) ; et
effectuer la transaction (26) avec le terminal de paiement (1).

15. Système selon la revendication 14, dans lequel l'au moins un module de sécurité inviolable (TRSM) est également agencé pour stocker au moins l'une parmi :
au moins une clé de transport spécifique à l'opérateur et au terminal (K4) pour déchiffrer une clé spécifique à l'opérateur chiffrée symétriquement, et
au moins une clé de chiffrement initial spécifique à l'opérateur et au terminal (K6) pour dériver (S14) une clé de chiffrement spécifique à l'opérateur et à la transaction (K7).

16. Système selon la revendication 14 ou 15, agencé en outre pour configurer l'au moins un terminal de paiement (1) selon l'une quelconque des revendications 2 à 13.
